(19) Europäisches Patentamt
European Patent Office
Office européen des brevets

(11) **EP 4 459 987 A1**

(12) **EUROPEAN PATENT APPLICATION**
published in accordance with Art. 153(4) EPC

(43) Date of publication:
06.11.2024 Bulletin 2024/45

(21) Application number: 22916756.4

(22) Date of filing: 28.12.2022

(51) International Patent Classification (IPC):
*H04N 19/11* (2014.01)      *H04N 19/597* (2014.01)
*H04N 19/70* (2014.01)      *H04N 19/176* (2014.01)
*H04N 19/105* (2014.01)

(52) Cooperative Patent Classification (CPC):
H04N 19/105; H04N 19/11; H04N 19/176;
H04N 19/597; H04N 19/70

(86) International application number:
PCT/KR2022/021520

(87) International publication number:
WO 2023/128615 (06.07.2023 Gazette 2023/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.12.2021 KR 20210190995

(71) Applicant: LG Electronics Inc.
Yeongdeungpo-gu
Seoul 07336 (KR)

(72) Inventor: JANG, Hyeongmoon
Seoul 06772 (KR)

(74) Representative: Maikowski & Ninnemann
Patentanwälte Partnerschaft mbB
Postfach 15 09 20
10671 Berlin (DE)

(54) **IMAGE ENCODING/DECODING METHOD AND DEVICE, AND RECORDING MEDIUM ON WHICH BITSTREAM IS STORED**

(57)    An image encoding/decoding method and device according to the present disclosure can induce an intra-prediction mode of the current block on the basis of an induction mode, determine a reference sample of the current block, and generate a prediction sample of the current block on the basis of the intra-prediction mode and the reference sample.

FIG.4

**Description**

[Technical Field]

The present disclosure relates to an image encoding/decoding method and device, and a recording medium storing a bitstream.

[Background Art]

Recently, the demand for high-resolution and highquality images such as HD (High Definition) images and UHD (Ultra High Definition) images has been increasing in various application fields, and accordingly, highly efficient image compression technologies are being discussed.

There are a variety of technologies such as interprediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

[Disclosure]

[Technical Problem]

The present disclosure seeks to provide a method and a device for deriving an intra prediction mode by considering a mode by a gradient-based derivation method.

The present disclosure seeks to provide a method and a device for deriving an intra prediction mode by considering a mode by a template region-based derivation method.

The present disclosure seeks to provide a method and a device for deriving an intra prediction mode by allocating a low priority to a mode by a gradient-based derivation method.

The present disclosure seeks to provide a method and a device for deriving an intra prediction mode by allocating a low priority to a mode by a template region-based derivation method.

[Technical Solution]

An image decoding method and device according to the present disclosure may derive an intra prediction mode of a current block based on a derivation mode, determine a reference sample of the current block, and generate a prediction sample of the current block based on the intra prediction mode and the reference sample. Here, the derivation mode may include at least one of a first derivation mode and a second derivation mode, and the first derivation mode may represent a mode for deriving an intra prediction mode of the current block based on a reconstructed neighboring sample of the current block, and the second derivation mode may represent a mode for deriving an intra prediction mode of the current block based on a cost of a template region adjacent to the current block.

An image decoding method and device according to the present disclosure may derive an intra prediction mode of the current block, configure a first candidate list including a plurality of MPM candidates and configure a second candidate list including the remaining intra prediction modes excluding the plurality of MPM candidates.

In an image decoding method and device according to the present disclosure, an intra prediction mode derived by using the first derivation mode may be added to the second candidate list based on whether a predefined condition is satisfied.

In an image decoding method and device according to the present disclosure, when the first derivation mode is activated, an intra prediction mode derived by using the first derivation mode may be added to the second candidate list, and the largest index may be allocated to an intra prediction mode derived by using the first derivation mode among the intra prediction modes included in the second candidate list.

In an image decoding method and device according to the present disclosure, when the first derivation mode is activated and only one intra prediction mode is derived by using the first derivation mode, an intra prediction mode derived by using the first derivation mode may be added to the second candidate list, and the largest index may be allocated to an intra prediction mode derived by using the first derivation mode among the intra prediction modes included in the second candidate list.

In an image decoding method and device according to the present disclosure, when the first derivation mode is activated, only one intra prediction mode is derived by using the first derivation mode and a reference line adjacent to the current block is used for intra prediction of the current block, an intra prediction mode derived by using the first derivation mode may be added to the second candidate list, and the largest index may be allocated to an intra prediction mode derived by using the first derivation mode among the intra prediction modes included in the second candidate list.

In an image decoding method and device according to the present disclosure, an intra prediction mode derived by using the second derivation mode may be added to the second candidate list based on whether a predefined condition is satisfied.

In an image decoding method and device according to the present disclosure, when the second derivation mode is activated, an intra prediction mode derived by using the second derivation mode may be added to the second candidate list, and the largest index may be allocated to an intra prediction mode derived by using the second derivation mode among the intra prediction modes included in the second candidate list.

In an image decoding method and device according to the present disclosure, when the second derivation mode is activated and only one intra prediction mode is derived by using the second derivation mode, an intra prediction mode derived by using the second derivation mode may be added to the second candidate list, and the largest index may be allocated to an intra prediction mode derived by using the second derivation mode among the intra prediction modes included in the second candidate list.

In an image decoding method and device according to the present disclosure, when the second derivation mode is activated, only one intra prediction mode is derived by using the second derivation mode and a reference line adjacent to the current block is used for intra prediction of the current block, an intra prediction mode derived by using the second derivation mode may be added to the second candidate list, and the largest index may be allocated to an intra prediction mode derived by using the second derivation mode among the intra prediction modes included in the second candidate list.

An image encoding method and device according to the present disclosure may determine an intra prediction mode of a current block, determine a reference sample of the current block and generate a prediction sample of the current block based on the intra prediction mode and the reference sample. Here, an intra prediction mode of the current block may be determined based on a determination mode, the determination mode may include at least one of a first determination mode and a second determination mode, the first determination mode may represent a mode for determining an intra prediction mode of the current block based on a reconstructed neighboring sample of the current block and the second determination mode may represent a mode for determining an intra prediction mode of the current block based on a cost of a template region adjacent to the current block.

A computer-readable digital storage medium storing encoded video/image information resulting in performing an image decoding method due to a decoding device according to the present disclosure is provided.

A computer-readable digital storage medium storing video/image information generated according to an image encoding method according to the present disclosure is provided.

A method and a device for transmitting video/image information generated according to an image encoding method according to the present disclosure are provided.

[Technical Effects]

According to the present disclosure, by allocating a low priority to a mode by a gradient-based derivation method, a selection probability of a prediction mode may be effectively reflected and signaling/encoding of an unnecessary flag may be removed.

According to the present disclosure, by allocating a low priority to a mode by a gradient-based derivation method, a selection probability of a prediction mode may be effectively reflected, bit signaling efficiency may be improved and compression performance may be improved.

According to the present disclosure, by allocating a low priority to a mode by a template region-based derivation method, a selection probability of a prediction mode may be effectively reflected and signaling/encoding of an unnecessary flag may be removed.

According to the present disclosure, by allocating a low priority to a mode by a template region-based derivation method, a selection probability of a prediction mode may be effectively reflected, bit signaling efficiency may be improved and compression performance may be improved.

[Brief Description of the Drawings]

FIG. 1 shows a video/image coding system according to the present disclosure.
FIG. 2 shows a rough block diagram of an encoding device to which an embodiment of the present disclosure may be applied and encoding of a video/image signal is performed.

FIG. 3 shows a rough block diagram of a decoding device to which an embodiment of the present disclosure may be applied and decoding of a video/image signal is performed.

FIG. 4 shows an intra prediction method performed by a decoding device as an embodiment according to the present disclosure.

FIG. 5 is a flowchart illustrating a method for configuring a MPM candidate list according to an embodiment of the present disclosure.

FIG. 6 is a flowchart illustrating a method for configuring a MPM candidate list according to an embodiment of the present disclosure.

FIG. 7 is a flowchart illustrating a method for configuring a MPM candidate list according to an embodiment of the present disclosure.

FIG. 8 is a flowchart illustrating a method for configuring a MPM candidate list according to an embodiment of the present disclosure.

FIG. 9 is a flowchart illustrating a method for configuring a MPM candidate list according to an embodiment of the present disclosure.

FIG. 10 shows a rough configuration of an intra prediction unit 331 that performs an intra prediction method according to the present disclosure.

FIG. 11 shows an intra prediction method performed by an encoding device as an embodiment according to the present disclosure.

FIG. 12 shows a rough configuration of an intra prediction unit 222 that performs an intra prediction method according to the present disclosure.

FIG. 13 shows an example of a contents streaming system to which embodiments of the present disclosure may be applied.

[Detailed Description]

Since the present disclosure may make various changes and have several embodiments, specific embodiments will be illustrated in a drawing and described in detail in a detailed description. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, a first component may be referred to as a second component without departing from the scope of a right of the present disclosure, and similarly, a second component may also be referred to as a first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (WC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the nextgeneration video/image coding standard (ex.H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular area composed of a plurality of CTUs within a specific tile column and a specific tile row of one picture. A tile column is a rectangular area of CTUs having the same height as that of a picture and a width designated by a syntax requirement of a picture parameter set. A tile row is a rectangular area of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular area of at least one slice within a picture.

A pixel, a pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific area of a picture and information related to a corresponding area. One unit may include one luma block and two chroma (ex. cb, cr) blocks. In some cases, a unit may be used interchangeably with a term such as a block or an area, etc. In a general case, a MxN block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

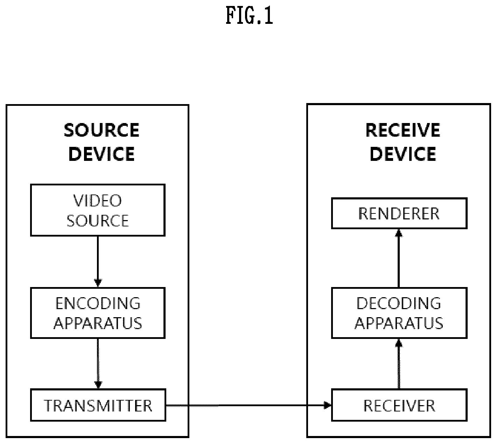

FIG. 1 shows a video/image coding system according to the present disclosure.

Referring to FIG. 1, a video/image coding system may include a first device (a source device) and a second device (a receiving device).

A source device may transmit encoded video/image information or data in a form of a file or streaming to a receiving device through a digital storage medium or a network. The source device may include a video source, an encoding device and a transmission unit. The receiving device may include a reception unit, a decoding device and a renderer. The encoding device may be referred to as a video/image encoding device and the decoding device may be referred to as a video/image decoding device. A transmitter may be included in an encoding device. A receiver may be included in a decoding device. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding device may encode an input video/image. An encoding device may perform a series of procedures such as prediction, transform, quantization, etc. for compression and coding efficiency. Encoded data (encoded video/image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding device.

A decoding device may decode a video/an image by performing a series of procedures such as dequantization, inverse transform, prediction, etc. corresponding to an operation of an encoding device.

A renderer may render a decoded video/image. A rendered video/image may be displayed through a display unit.

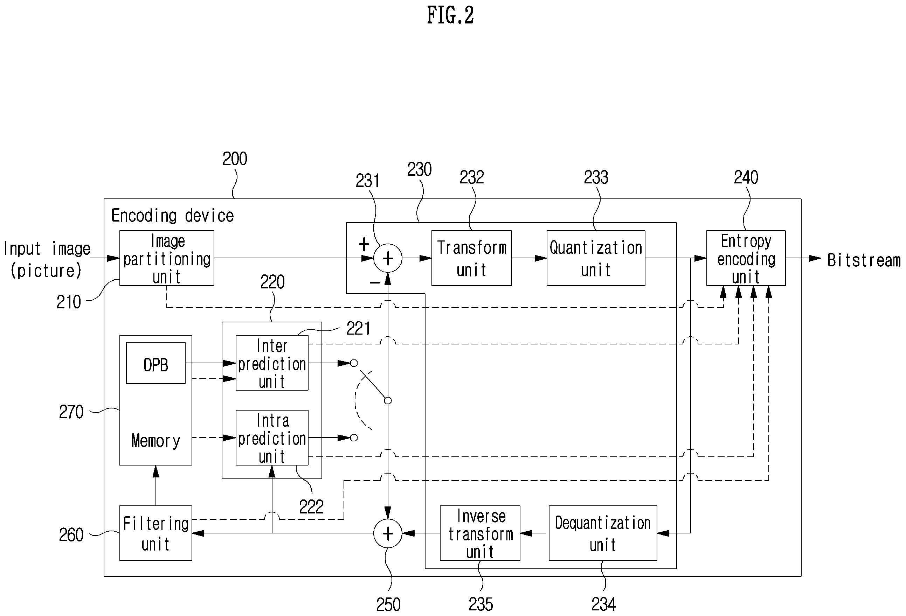

FIG. 2 shows a rough block diagram of an encoding device to which an embodiment of the present disclosure may be applied and encoding of a video/image signal is performed.

Referring to FIG. 2, an encoding device 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) according to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding device 200 into at least one processing unit. As an example, the processing unit may be referred to as a coding unit (CU). In this case, a coding unit may be partitioned recursively according to a quad-tree binarytree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an area, etc. In a general case, a MxN block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding device 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding device 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (LO prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a surrounding block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Non-linear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may rearrange quantized transform coefficients in a block form into an one-dimensional vector form based on coefficient scan order, and may generate information on the quantized transform coefficients based on the quantized transform coefficients in the one-dimensional vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form.. The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding device to a decoding device may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding device 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictpr 221. When inter prediction is applied through it, an encoding device may avoid prediction mismatch in an encoding device 200 and a decoding device, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

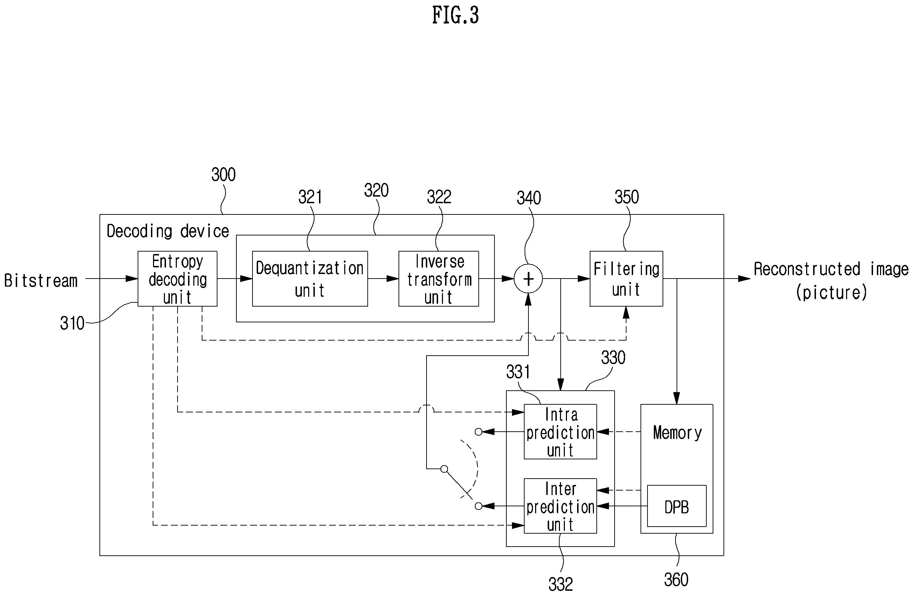

FIG. 3 shows a rough block diagram of a decoding device to which an embodiment of the present disclosure may be applied and decoding of a video/image signal is performed.

Referring to FIG. 3, a decoding device 300 may be configured by including an entropy decoder 310, a residual processor 320, a predictor 330, an adder 340, a filter 350 and a memory 360. A predictor 330 may include an inter predictor 331 and an intra predictor 332. A residual processor 320 may include a dequantizer 321 and an inverse transformer 321.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding device 300 may reconstruct an image in response to a process in which video/image information is processed in an encoding device of FIG. 2. For example, a decoding device 300 may derive units/blocks based on block partition-related information obtained from the bitstream. A decoding device 300 may perform decoding by using a processing unit applied in an encoding device. Accordingly, a processing unit of decoding may be a coding unit, and a coding unit may be partitioned from a coding tree unit or the large coding unit according to a quad tree structure, a binary tree structure and/or a ternary tree structure. At least one transform unit may be derived from a coding unit. And, a reconstructed image signal decoded and output through a decoding device 300 may be played through a playback device.

A decoding device 300 may receive a signal output from an encoding device of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding device may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a surrounding block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding device may be further configured as an internal/external element of a decoding device 300 or a reception unit may be a component of an entropy decoder 310.

Meanwhile, a decoding device according to this specification may be referred to as a video/image/picture decoding device, and the decoding device may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may rearrange quantized transform coefficients into a twodimensional block form. In this case, the rearrangement may be performed based on coefficient scan order performed in an encoding device. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter prediction unit 332. A memory 360 may store motion information of a block from which motion information in a current picture is derived (or decoded) and/or motion information of blocks in a pre-reconstructed picture. The stored motion information may be transmitted to an inter predictor 260 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding device 200 may be also applied equally or correspondingly to a filter 350, an inter predictor 332 and an intra predictor 331 of a decoding device 300, respectively.

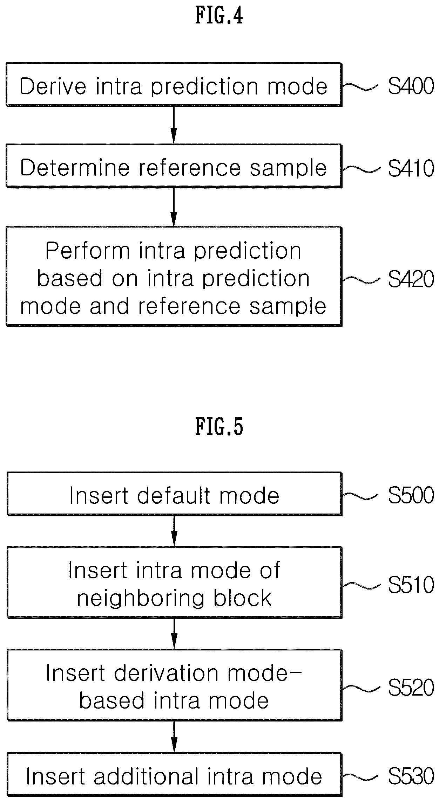

FIG. 4 shows an intra prediction method performed by a decoding device as an embodiment according to the present disclosure.

Referring to FIG. 4, a decoding device may derive an intra prediction mode of a current block S400.

An intra prediction mode of a current block may be derived from intra prediction modes that are pre-defined in a decoding device. The pre-defined intra prediction modes may include a non-directional mode and a directional mode. Here, a non-directional mode may include at least one of a planar mode or a DC mode. An intra prediction mode of a current block may be derived based on a most probable mode (MPM) or may be derived based on a template region of a current block.

MPM-based Derivation Method

According to a MPM-based derivation method, an intra prediction mode of a current block may be derived based on signaled intra prediction mode information. Here, intra prediction mode information includes one or more flags and/or indexes, and based thereon, an intra prediction mode of a current block may be derived.

Intra prediction modes that are pre-defined in a decoding device may be divided into K groups. Here, K may be an integer of 2, 3, 4, or more. Hereinafter, for convenience of a description, it is assumed that the pre-defined intra prediction modes are divided into three groups, and three groups are referred to as a first group to a third group.

A first group may include one or more non-directional modes. A non-directional mode may refer to at least one of a planar mode or a DC mode.

A second group may be referred to as a MPM list, which may include a plurality of most probable modes (MPM). A plurality of MPMs may include at least one of an intra prediction mode, a derived mode, or a default mode of a neighboring block adjacent to a current block.

The neighboring block may include at least one of a left block, a top block, a bottom-left block, a top-right block, or a top-left block. A mode of the neighboring block may be sequentially added to a MPM list according to a priority between the neighboring blocks. Here, a priority may be defined in the order of a left block, a top block, a bottom-left block, a top-right block and a top-left block, or may be defined in the order of a top block, a left block, a bottom-left block, a top-right block and a top-left block. Alternatively, the priority order may be adaptively determined based on a size and/or a shape of a current block. As an example, if a height of a current block is greater than a width, the priority of a top block, a left block, a bottom-left block, a top-right block, and a top-left block may be used. Conversely, if a width of a current block is greater than a height, the priority of a left block, a top block, a bottom-left block, a top-right block, and a top-left block may be used.

The derived mode may be derived by adding or subtracting an offset to or from an intra prediction mode of the neighboring block. Alternatively, the derived mode may be derived by adding or subtracting an offset to or from a default mode described later. Here, an offset may be an integer of 1, 2, 3, 4, or more. The derived mode may be derived based on a neighboring block with a high priority among the above-described neighboring blocks. The derived mode may not be derived based on a neighboring block with a low priority among the above-described neighboring blocks. Here, a neighboring block with a high priority may include at least one of a left block or a top block. Conversely, a neighboring block with a low priority may include at least one of a bottom-left block, a top-right block, or a top-left block. However, if an intra prediction mode of a neighboring block corresponds to a non-directional mode, the derived mode may not be derived based on an intra prediction mode of a corresponding neighboring block.

The default mode may refer to a mode that is predefined in a decoding device to configure a MPM list. As an example, a default mode may include at least one of a planar mode, a DC mode, a horizontal mode, a vertical mode, or a diagonal mode. Here, a diagonal mode may refer to one or more of a bottom-left diagonal mode, a top-left diagonal mode, or a top-right diagonal mode.

The second group may be divided into two sub-groups, which will be referred to as a primary MPM list and a secondary MPM list. As an example, if a MPM list consists of N MPMs, M top MPMs belonging to a MPM list may be included in a primary MPM list, and the (N-M) remaining MPMs may be included in a secondary MPM list. In other words, a primary MPM list may include a MPM with an index of 0 to (M-1) belonging to a MPM list. Here, N may refer to the maximum number of MPMs that may be included in a MPM list. M refers to the maximum number of MPMs that may be included in a primary MPM list, and as an example, M may be an integer of 3, 4, 5, 6, or more.

A third group may include the remaining modes that do not belong to a first group and a second group among the predefined intra prediction modes.

In the embodiment, a first group is defined as a separate group distinct from a second group, but is not limited thereto. As an example, a first group and a second group may be defined as one group, and in this case, a non-directional mode of a first group may be any one of MPMs included in a MPM list of a second group.

One or more flags may be signaled to specify a group and/or a sub-group to which the same mode as an intra prediction mode of a current block belongs. The flag may include at least one of a first flag indicating whether the same mode as an intra prediction mode of a current block belongs to a first group, a second flag indicating whether the same mode as an intra prediction mode of a current block belongs to a second group (i.e., a MPM list), a third flag indicating whether the same mode as an intra prediction mode of a current block belongs to a primary MPM list, or a fourth flag indicating whether the same mode as an intra prediction mode of a current block belongs to a secondary MPM list.

When a second group is specified by the flag, an index specifying any one of a plurality of MPMs belonging to a second group may be signaled. An intra prediction mode of a current block may be derived based on a MPM specified by the index. Alternatively, when a primary MPM list is specified by the flag, an index specifying any one of a plurality of MPMs belonging to a primary MPM list may be signaled. An intra prediction mode of a current block may be derived based on a MPM specified by the index. Alternatively, when a secondary MPM list is specified by the flag, an index specifying any one of a plurality of MPMs belonging to a secondary MPM list may be signaled. An intra prediction mode of a current block may be derived based on a MPM specified by the index. Likewise, when a first group (or a third group) is specified by the flag, an index specifying any one of a plurality of intra prediction modes belonging to a first group (or a third group) may be signaled separately, and an intra prediction mode of a current block may be derived based on a signaled index. However, when a first group (or a third group) consists of one intra prediction mode, signaling of the index may be omitted.

The above-described flag may be signaled with dependency between flags. As an example, a first flag may be parsed after a second flag is parsed from a bitstream. A first flag may be parsed when a second flag is True. Alternatively, a second flag may be parsed after a first flag is parsed from a bitstream. A second flag may be parsed when a first flag is False. If a second flag is True, a third flag (or a fourth flag) may be parsed from a bitstream, and if a second flag is False, a third flag (or a fourth flag) may not be parsed from a bitstream. Alternatively, a fourth flag may be parsed after a third flag is parsed from a bitstream. A fourth flag may be parsed when a third flag is False.

Gradient-based Derivation Method

A gradient may be calculated based on at least two samples belonging to a neighboring region of a current block. Here, a gradient may include at least one of a horizontal gradient or a vertical gradient. Based on at least one of the calculated gradient or an amplitude of a gradient, an intra prediction mode of a current block may be derived. Here, an amplitude of a gradient may be determined based on a sum of a horizontal gradient and a vertical gradient. Through this derivation method, one intra prediction mode may be derived for a current block, or at least two intra prediction modes may be derived. In the present disclosure, the gradient-based derivation method may be referred to as a decoder side Intra Mode Derivation (DIMD) mode.

As an embodiment, when a gradient-based derivation method is applied, at least one intra prediction mode may be derived from a reconstructed neighboring sample. In this case, at least one prediction mode may be derived based on a gradient calculated from a reconstructed neighboring sample according to an embodiment of the present disclosure. For example, one or two intra prediction modes may be derived from a reconstructed neighboring sample. A predictor obtained by a derived intra prediction mode may be combined with a predictor obtained by a planar mode (it may be abbreviated as a planar mode predictor). As an example, a predictor obtained by a derived intra prediction mode may be weighted summed with a planar mode predictor. In this case, as an example, a weight used for the weighted sum may be determined based on a gradient calculated from a reconstructed neighboring sample according to an embodiment of the present disclosure.

In addition, as an example, a gradient may be calculated in a unit of a window with a predetermined size. Based on a calculated gradient, an angle showing directivity of a sample within a corresponding window may be calculated. A calculated angle may correspond to any one of a plurality of pre-defined intra prediction modes described above. An amplitude of the gradient may be stored/updated for an intra prediction mode corresponding to the calculated angle. Through this process, an intra prediction mode corresponding to a calculated gradient may be determined per each window, and an amplitude of a gradient may be stored/updated for a determined intra prediction mode. T top intra prediction modes having the largest amplitude may be selected among the amplitudes of the stored gradient, and a selected intra prediction mode may be configured as an intra prediction mode of a current block. Here, T may be an integer of 1, 2, 3, or more.

A neighboring region used to calculate the gradient is a region which is pre-reconstructed before a current block, and may include at least one of a left region, a top region, a top-left region, a bottom-left region or a top-right region adjacent to a current block. The neighboring region may include at least one of a neighboring sample line adjacent to a current block, a first non-neighboring sample line 1 sample away from a current block, or a second non-neighboring sample line 2 samples away from a current block. However, it is not limited thereto, and a non-neighboring sample line N-samples away from a current block may be further included, and N may be an integer greater than or equal to 3.

The neighboring region may be a region that is predefined equally for an encoding device and a decoding device for calculating the gradient. Alternatively, the neighboring region may be variably determined based on information specifying a position of the neighboring region. In this case, information specifying a position of the neighboring region may be signaled through a bitstream. Alternatively, a position of the neighboring region may be determined based on at least one of whether a current block is positioned at a boundary of a coding tree unit, a size of a current block (e.g., a width, a height, a width to height ratio, a product of a width and a height), a partition type of a current block, a prediction mode of a neighboring region or availability of a neighboring region.

As an example, when a current block is positioned at a top boundary of a coding tree unit, at least one of a top region, a top-left region or a top-right region of a current block may not be referred to for calculating a gradient. If a width of a current block is greater than a height, any one of a top region or a left region (e.g., a top region) may be referred to for calculating a gradient, and the other (e.g., a left region) may not be referred to for calculating a gradient. Conversely, if a width of a current block is less than a height, any one of a top region or a left region (e.g., a left region) may be referred to for calculating a gradient, and the other (e.g., a top region) may not be referred to for calculating a gradient. If a current block is generated through horizontal block partition, a top region may not be referred to for calculating a gradient. Conversely, if a current block is generated through vertical block partition, a left region may not be referred to for calculating a gradient. If a neighboring region of a current block is encoded in an inter mode, a corresponding neighboring region may not be referred to for calculating a gradient. However, it is not limited thereto, and regardless of a prediction mode of a neighboring region, a corresponding neighboring region may be referred to for calculating a gradient.

The above-described gradient-based derivation method may be used adaptively based on a predetermined flag (Dimd_flag). Here, a flag may indicate whether an intra prediction mode of a current block is derived based on a gradient calculated from a neighboring region adjacent to a current block. As an example, when the flag is a first value, an intra prediction mode of a current block may be derived by using a gradient-based derivation method, and when the flag is a second value, an intra prediction mode of a current block may be derived by using a MPM-based derivation method.

The flag may be signaled from a bitstream based on at least one of 1) whether a gradient-based derivation method is available, 2) whether a luma component of a current block is valid, 3) whether a prediction mode of a current block is an intra mode, or 4) whether a component type of a current block is a luma component.

Whether the gradient-based derivation method is available may be determined based on a flag signaled at at least one level of a video sequence, a picture, a picture header, or a slice header.

If a current block is a luma block in a dual tree type or a single tree type, it may be determined that a luma component of a current block is valid. On the other hand, if a current block is a chroma block in a dual tree type, it may be determined that a luma component of a current block is invalid. Here, a single tree type may refer to a tree type in which a chroma block of a coding unit has a partition structure that is dependent on a partition structure of a luma block, and a dual tree type may refer to a tree type in which a chroma block of a coding unit has a partition structure that is independent of a luma block.

Even if a current block is a single tree type, if a current block is a chroma block, whether a component type of a current block is a luma component may be determined to be False. On the other hand, even if a current block is a single tree type, if a current block is a luma block, whether a component type of a current block is a luma component may be determined to be True. If a current block is a luma block in a dual tree type, whether a component type of a current block is a luma component may be determined to be True, and if a current block is a chroma block in a dual tree type, whether a component type of a current block is a luma component may be determined to be False.

In terms of a decoding device, the gradient-based derivation method may refer to a method for deriving an intra prediction mode based on a gradient calculated from a neighboring region of a current block.

As an example, the flag may be signaled as in Table 1 below.

[Table 1]

| if(sps.useDimd && Y.valid() && predMode == MODE_INTRA && isLuma()) |
|---|
| **Dimd_flag** |

In Table 1, sps.useDimd may show whether a gradient-based derivation method is available for a video sequence to which a current block belongs. Y.valid() may represent whether a luma component is valid for a current block, and predMode may represent a prediction mode of a current block. isLuma() may represent whether a component type of a current block is a luma component.

According to Table 1, the flag (Dimd_flag) may be signaled from a bitstream when 1) a gradient-based derivation method is available for a video sequence to which a current block belongs, 2) a luma component is valid for a current block, 3) a prediction mode of a current block is an intra mode, or 4) a component type of a current block is a luma component.

When a signaled flag is 1, an intra prediction mode of a current block may be derived through a gradient-based derivation method, and when the signaled flag is 0, an intra prediction mode of a current block may be derived through a MPM-based derivation method.

Meanwhile, if a condition according to Table 1 is not satisfied, the flag may not be signaled from a bitstream. In this case, the flag may be derived to 0, and an intra prediction mode of a current block may be derived through a MPM-based derivation method.

If a neighboring block of a current block is not available, a neighboring region for calculating a gradient may not be configured. In this case, since an amplitude of all gradients is 0, a pre-configured initial intra prediction mode may be used as an intra prediction mode of a current block. In this case, a value of a pre-configured initial intra prediction mode may be configured as 0, which corresponds to a planar mode. In other words, even if a flag parsed according to a condition in Table 1 is 1, if a neighboring block of a current block is not available, a gradient-based derivation method is not used, and an intra prediction mode of a current block may be configured as a planar mode, a pre-configured mode.

Template Region-based Derivation Method

In terms of a decoder, an intra prediction mode may be derived based on a template region adjacent to a current block, which is discussed in detail below. In the present disclosure, the template region-based derivation method may be referred to as a Template-based Intra Mode Derivation (TIMD) mode.

A cost for each of predetermined candidate modes may be calculated.

The predetermined candidate modes may refer to a plurality of intra prediction modes that are pre-defined equally for an encoding device and a decoding device. Alternatively, for template region-based derivation, a candidate list consisting of the candidate modes may be generated, and a cost may be calculated for candidate modes belonging to the candidate list. Alternatively, a cost may be calculated only for N top candidate modes within the generated candidate list. Here, N may be a value that is pre-defined equally for an encoding device and a decoding device. As an example, N may be an integer of 2, 3, 4, 5 or more.

A candidate list for template region-based derivation may be configured in the same way as a MPM list described above. Alternatively, a candidate list may correspond to the above-described primary MPM list or secondary MPM list. Alternatively, a candidate list may consist of a combination of a first group and a second group (i.e., a MPM list) described above, or may consist of a combination of a sub-group of a first group and a second group (i.e., a primary MPM list or a secondary MPM list).

The cost may be calculated as a sum of absolute difference (SAD) between prediction samples and reconstructed samples in a template region. Alternatively, the cost may be calculated as a sum of absolute transformed difference (SATD) between prediction samples and reconstructed samples in a template region. Here, a SATD may refer to a SAD transformed to a frequency domain. As an example of the transform, Hadamard transform may be used, but is not limited thereto. Prediction samples in a template region may be generated based on a candidate mode described above.

A template region for calculating the cost may be a pre-reconstructed region adjacent to a current block. As an example, the template region may include at least one of a top neighboring region, a left neighboring region, a top-left neighboring region, a bottom-left neighboring region, or a top-right neighboring region.

The template region may be a region that is pre-defined equally for an encoding device and a decoding device for calculating the cost. Alternatively, the template region may be variably determined based on information specifying a position of the template region. In this case, information specifying a position of a template region may be signaled through a bitstream. Alternatively, a position of a template region may be determined based on at least one of whether a current block is positioned on a boundary of a coding tree unit, a size of a current block (e.g., a width, a height, a width to height ratio, a product of a width and a height), a partition type of a current block, a prediction mode of a neighboring region, or the availability of a neighboring region.

As an example, when a current block is positioned at a top boundary of a coding tree unit, at least one of a top neighboring region, a top-left neighboring region or a top-right neighboring region of a current block may not be referred to for calculating a cost. If a width of a current block is greater than a height, any one of a top neighboring region or a left neighboring region (e.g., a top neighboring region) may be referred to for calculating a cost, and the other (e.g., a left neighboring region) may not be referred to for calculating a gradient. Conversely, if a width of a current block is smaller than a height, any one of a top neighboring region or a left neighboring region (e.g., a left neighboring region) may be referred to for calculating a cost, and the other (e.g., a top neighboring region) may not be referred to for calculating a cost. If a current block is generated through horizontal block partition, a top neighboring region may not be referred to for calculating a cost. Conversely, if a current block is generated through vertical block partition, a left neighboring region may not be referred to for calculating a cost. If a neighboring region of a current block is encoded in an inter mode, a corresponding neighboring region may not be referred to for calculating a cost. However, it is not limited thereto, and a corresponding neighboring region may be referred to for calculating a cost regardless of a prediction mode of a neighboring region.

The template region may consist of N reference sample lines. Here, N may be an integer of 1, 2, 3, 4, or more. The number of reference sample lines configuring a template region may be the same regardless of a position of a neighboring region, or may vary depending on a position of a neighboring region. A cost may be calculated based on all samples belonging to the template region. Alternatively, a cost may be calculated by using only a reference sample line at a predetermined position within the template region. Alternatively, a cost may be calculated based on all samples belonging to a reference sample line at the predetermined position, or a cost may be calculated by using only a sample at a predetermined position in a reference sample line at the predetermined position. A position of a reference sample line and/or a sample for calculating the cost may be determined based on at least one of whether a current block is positioned on a boundary of a coding tree unit, a size of a current block (e.g., a width, a height, a width to height ratio, a product of a width and a height), a partition type of a current block, a prediction mode of a neighboring region, or availability of a neighboring region. Alternatively, information indicating a position of a reference sample line for calculating the cost may be signaled through a bitstream.

Among costs calculated for the candidate modes, one candidate mode with the minimum cost may be selected. As an example, a cost for five candidate modes in a candidate list may be calculated, respectively. In the ascending order of calculated costs, five candidate modes in a candidate list may be rearranged. Among five rearranged candidate modes, one top candidate mode may be selected.

Alternatively, at least two candidate modes with the minimum cost among costs calculated for the candidate modes may be selected. As an example, a cost for five candidate modes in a candidate list may be calculated, respectively. In the ascending order of calculated costs, five candidate modes in a candidate list may be rearranged. Among five rearranged candidate modes, two top candidate modes may be selected.

One or more candidate modes selected through the above-described process may be configured as an intra prediction mode of a current block.

Alternatively, when at least two candidate modes are selected through the above-described process, an intra prediction mode of a current block may be derived based on comparison between selected candidate modes and/or comparison between at least one of selected candidate modes and a threshold value. As an example, an intra prediction mode of a current block may be derived based on whether selected candidate modes satisfy the following condition.

[Condition] costMode2 < (K x costMode1)

In the condition, costMode1 may refer to a cost calculated based on any one of selected candidate modes, and costMode2 may refer to a cost calculated based on another of selected candidate modes. As an example, costMode1 may refer to a cost calculated based on a candidate mode with a smaller cost among selected candidate modes, and costMode2 may refer to a cost calculated based on a candidate mode with a larger cost among selected candidate modes. In the conditions, K represents a predetermined comparison factor, which may be a value that is pre-defined equally for an encoding device and a decoding device. As an example, K may be an integer of 1, 2, or more, or may refer to a real number such as 1/2 or 1/4.

If the condition is satisfied, the selected candidate modes may be configured as an intra prediction mode of a current block. On the other hand, if the condition is not satisfied, a candidate mode with a cost of costMode1 may be configured as an intra prediction mode of a current block, and a candidate mode with a cost of costMode2 may not be used as an intra prediction mode of a current block.

The above-described template region-based derivation method may be used adaptively based on a predetermined flag (Timd_flag). Here, a flag may indicate whether an intra prediction mode of a current block is derived based on a cost calculated from a template region of a current block. As an example, if the flag is a first value, an intra prediction mode of a current block may be derived through a template region-based derivation method, and if the flag is a second value, an intra prediction mode of a current block may be derived through a MPM-based derivation method.

The flag may be signaled from a bitstream based on at least one of 1) whether a template region-based derivation method is available, 2) whether a luma component of a current block is valid, 3) whether a prediction mode of a current block is an intra mode, 4) whether a component type of a current block is a luma component, 5) whether a size of a current block is larger than a predetermined threshold size, 6) whether a slice to which a current block belongs is slice I, or 7) whether a gradient-based derivation method is applied to a current block.

Whether a template region-based derivation method is available may be determined based on a flag signaled at at least one level of a video sequence, a picture, a picture header, or a slice header.

If a current block is a luma block in a dual tree type or a single tree type, it may be determined that a luma component of a current block is valid. On the other hand, if a current block is a chroma block in a dual tree type, it may be determined that a luma component of a current block is invalid. Here, a single tree type may refer to a tree type in which a chroma block of a coding unit has a partition structure that is dependent on a partition structure of a luma block, and a dual tree type may refer to a tree type in which a chroma block of a coding unit has a partition structure that is independent of a luma block.

Even if a current block is a single tree type, if a current block is a chroma block, whether a component type of a current block is a luma component may be determined to be False. On the other hand, even if a current block is a single tree type, if a current block is a luma block, whether a component type of a current block is a luma component may be determined to be True. If a current block is a luma block in a dual tree type, whether a component type of a current block is a luma component may be determined to be True, and if a current block is a chroma block in a dual tree type, whether a component type of a current block is a luma component may be determined to be False.

In terms of a decoding device, the template region-based derivation method may refer to a method for deriving an intra prediction mode based on a cost calculated from a neighboring template region of a current block.

As an example, the flag may be signaled as in Table 2 below.

[Table 2]

| if(sps.useTimd && && Y.valid() && predMode = MODE_INTRA && isLuma() && ! (W*H > 1024 && I_SLICE) && ! dimd) |
| --- |
| **Timd_flag** |

In Table 2, sps.useTimd may show whether a template region-based derivation method is available for a video sequence to which a current block belongs. W and H may represent a width and a height of a current block, respectively, and dimd may represent whether a gradient-based derivation method is used. Y.valid() may represent whether a luma component is valid for a current block, and predMode may represent a prediction mode of a current block. isLuma() may represent whether a component type of a current block is a luma component.

According to Table 2, the flag (Timd_flag) may be signaled from a bitstream when 1) a template region-based derivation method is available for a video sequence to which a current block belongs, 2) a luma component is valid for a current block, 3) a prediction mode of a current block is an intra mode, 4) a component type of a current block is a luma component, 5) a product of a width and a height of a current block is less than 1024, 6) a type of a slice to which a current block belongs is slice I, or 7) a gradient-based derivation method is not applied to a current block.

When a signaled flag is 1, an intra prediction mode of a current block may be derived through a template region-based derivation method, and when the signaled flag is 0, an intra prediction mode of a current block may be derived through a MPM-based derivation method.

Meanwhile, if a condition according to Table 2 is not satisfied, the flag may not be signaled from a bitstream. In this case, the flag may be derived to 0, and an intra prediction mode of a current block may be derived through a MPM-based derivation method.

If a neighboring block of a current block is not available, a template region for calculating a cost may not be configured. In this case, a pre-configured initial intra prediction mode may be used as an intra prediction mode of a current block. In this case, a value of a pre-configured initial intra prediction mode may be configured as 0, which corresponds to a planar mode. In other words, even if a flag parsed according to a condition in Table 2 is 1, if a neighboring block of a current block is not available, a template region-based derivation method is not used, and an intra prediction mode of a current block may be configured as a planar mode, a pre-configured mode.

A decoding device may determine a reference sample of a current block S410.

A reference sample for intra prediction of a current block may be determined from one or more reference sample lines. A current block may use one reference sample line, or may use at least two reference sample line.

A reference sample line for intra prediction of a current block may be selected from a plurality of reference sample line candidates that are pre-defined equally for an encoding device and a decoding device. The plurality of pre-defined reference sample line candidates may include at least one of a first reference sample line adjacent to a current block, a second reference sample line 1 sample away from a current block, a third reference sample line 2 samples away from a current block, or a fourth reference sample line 3 samples away from a current block.

To determine a reference sample line of a current block, index information specifying a position of a reference sample line to which a reference sample of a current block belongs may be used. As an example, index information specifying any one of the plurality of reference sample line candidates may be signaled. Alternatively, when two reference sample lines are used for intra prediction of a current block, two index information specifying two reference sample lines among a plurality of reference sample line candidates may be signaled, respectively. Alternatively, as any one of the two reference sample lines is a default reference sample line, signaling of index information therefor may be omitted, and only index information for the other of two reference sample lines may be signaled. Here, a default reference sample line refers to a reference sample line at a pre-defined position equally for an encoding device and a decoding device, and for example, it may be a first reference sample line adjacent to a current block.

Meanwhile, a reference sample line of a current block may be used to determine an intra prediction mode of a current block, and in this case, S410 may be performed before S400.

A decoding device may perform intra prediction of a current block based on an intra prediction mode and a reference sample of a current block S420.

When an intra prediction mode of a current block is a planar mode, a prediction sample of a current block may be generated through a first prediction sample, a second prediction sample, or a weighted sum of first and second prediction samples. Here, a first prediction sample may be generated through horizontal interpolation. As an example, a first prediction sample may be generated by interpolating a reference sample positioned at a top-right corner of a current block and one or more reference samples positioned on the same horizontal line as a first prediction sample. The second prediction sample may be generated through vertical interpolation. As an example, a second prediction sample may be generated by interpolating a reference sample positioned at a bottom-left corner of a current block and one or more reference samples positioned on the same vertical line as a second prediction sample.

If an intra prediction mode of a current block is a DC mode, an average value of neighboring samples adjacent to a current block may be calculated, and a calculated average value may be configured as all prediction samples in a current block. Here, a neighboring sample may include a top reference sample and a left reference sample of a current block. However, depending on a shape of a current block, an average value may be calculated by using only a top reference sample or a left reference sample.

If an intra prediction mode of a current block is a directional mode, projection may be performed on a reference sample line according to an angle of a corresponding directional mode. If a reference sample exists at a projected position, a corresponding reference sample may be configured as a prediction sample of a current block. If a reference sample does not exist at a projected position, a sample corresponding to a projected position may be generated by using one or more neighboring samples neighboring a projected position. As an example, interpolation may be performed based on two or more neighboring samples neighboring in both directions based on a projected position to generate a sample at a projected position (i.e., a fractional-pel position). Alternatively, any one of a plurality of neighboring samples neighboring a projected position may be configured as a sample at a projected position. In this case, among a plurality of neighboring samples neighboring a projected position, a neighboring sample closest to a projected position may be used. A prediction sample of a current block may be generated based on a sample at a projected position.

A plurality of reference sample lines may be used for intra prediction of a current block, and in this case, a projected position may exist for each reference sample line. In other words, a plurality of samples at a projected position may be determined, and a prediction sample of a current block may be generated based on a weighted sum thereof.

A plurality of intra prediction modes may be derived for a current block through a MPM-based derivation method, a gradient-based derivation method, or a template region-based derivation method. Hereinafter, for convenience of a description, it is assumed that two intra prediction modes are derived for a current block, and it will be referred to as a first intra prediction mode and a second intra prediction mode, respectively.

A first prediction sample according to the first intra prediction mode may be generated, and a second prediction sample according to the second intra prediction mode may be generated. A prediction sample of a current block may be generated based on a weighted sum of the first prediction sample and the second prediction sample.

When the first and second intra prediction modes are derived through a gradient-based derivation method, a weight for the weighted sum may be determined based on an amplitude of a gradient calculated from a neighboring region of a current block. As an example, if an amplitude of a gradient corresponding to a first intra prediction mode is G1 and an amplitude of a gradient corresponding to a second intra prediction mode is G2, a weight of (G1/(G1+G2)) may be applied to a first prediction sample according to a first intra prediction mode, and a weight of (G2/(G1+G2)) may be applied to a second prediction sample according to a second intra prediction mode, respectively.

When the first and second intra prediction modes are derived through a MPM-based derivation method, a weight for the weighted sum may be determined by considering at least one of a mode value, a position of a group to which a corresponding intra prediction mode belongs, or whether it is a non-directional mode. As an example, when a first intra prediction mode has a smaller mode value than a second intra prediction mode, a greater weight may be applied to a first prediction sample according to a first intra prediction mode. Alternatively, if a group to which a first intra prediction mode belongs is a higher group than a group to which a second intra prediction mode belongs (e.g., when a first intra prediction mode belongs to a first group, and a second intra prediction mode belongs to a second group), a greater weight may be applied to a first prediction sample according to a first intra prediction mode. Alternatively, when a first intra prediction mode is a non-directional mode and a second intra prediction mode is a directional mode, a greater weight may be applied to a first prediction sample according to a first intra prediction mode. When both first and second intra prediction modes are a non-directional mode, the same weight may be applied to a first prediction sample and a second prediction sample, and a greater weight may be applied to a prediction sample corresponding to an intra prediction mode with a smaller mode value between first and second intra prediction modes.

The first intra prediction mode and the second intra prediction mode may share one same reference sample line. Alternatively, a reference sample line may be determined independently for each of first and second intra prediction modes. First and second prediction samples may be generated based on a different reference sample line. In other words, the number/position of reference sample lines used to generate a first prediction sample may be different from the number/position of reference sample line used to generate a second prediction sample.

Meanwhile, when a template region-based derivation method or a gradient-based derivation method is enabled, an intra prediction mode derived by a template region-based derivation method or a gradient-based derivation method may be considered in preference to an intra prediction mode derived by a MPM-based derivation method. Even if a template region-based derivation method or a gradient-based derivation method is enabled, if a template region-based derivation method or a gradient-based derivation method is not applied, it may be seen that there is a relatively high possibility that an intra prediction mode derived by a template region-based derivation method or a gradient-based derivation method is not used for intra prediction of a current block.

In an embodiment of the present disclosure, if a template region-based derivation method or a gradient-based derivation method is enabled, and a template region-based derivation method or a gradient-based derivation method is not selected even if a mode derived by a template region-based derivation method or a gradient-based derivation method is a planar mode, a method for avoiding separately transmitting a flag indicating whether a planar mode is used for intra prediction is proposed. In the present disclosure, a mode derived by a template region-based derivation method may be referred to as a template region-based derivation mode or a TIMD mode. In addition, a mode derived by a gradient-based derivation method may be referred to as a gradient-based derivation mode or a DIMD mode.

If a template region-based derivation method and/or a gradient-based derivation method is not applied, the above-described MPM-based derivation method may be applied. As an example, when a MPM-based derivation method is applied, at least one of a primary MPM, a secondary MPM, or a remaining mode may be used for an intra prediction mode. Here, a MPM and a secondary MPM may be two sub-groups of a second group described above.

As described above, a gradient-based derivation method may be used adaptively based on a DIMD flag, and a template region-based derivation method may be used adaptively based on a TIMD flag. For a transmission condition of a DIMD flag and/or a TIMD flag, whether there is a reconstructed neighboring sample or a template region (or availability) may not be considered. Although an intra prediction mode may not be derived through a gradient or decoder-side RDO because a reconstructed neighboring sample or a template region is not available, a corresponding flag may be signaled. In an embodiment, when the above-described condition is satisfied, a default mode may be derived by a corresponding derivation method. The default mode may be configured as a planar mode or a DC mode.

In other words, if a DIMD flag or a TIMD flag is signaled to a value of 1 when a reconstructed neighboring sample or a template region is not available, a prediction block may be generated by configuring an intra prediction mode as a planar mode without separate additional syntax signaling for deriving an intra prediction mode. Alternatively, if a corresponding region is completely plain even if a template region or a neighboring region is available, a gradient may not be calculated, so even in this case, prediction may be performed by using a pre-configured default mode. The default mode may be configured as a planar mode or a DC mode.

When a prediction block is generated in a planar mode according to the above-described process, it may have the effect of generating the same prediction block as a planar mode of a MPM list. In other words, a default mode may be configured as a planar mode because a reconstructed neighboring region or a template region is not available, and when a DIMD flag and a TIMD flag are 0, it may show that a planar mode may not be selected. Nevertheless, if a flag (e.g., intra_luma_not_planar_flag) indicating whether a planar mode is used for intra prediction is signaled as before, efficiency may be reduced in terms of prediction performance.

Accordingly, according to an embodiment of the present disclosure, in order to solve this problem, even if TIMD or DIMD is activated and a predictor may be generated based on a planar mode, if a flag value for selecting TIMD or DIMD is transmitted as 0 and a corresponding mode is not selected, a method for avoiding signaling a flag indicating whether to use a planar mode is proposed. In the present disclosure, a flag indicating whether to use (or apply) a planar mode is collectively referred to as a planar flags. The planar flag may be referred to as intra_luma_not_planar_flag, intraLumaPlanarFlag, intraLumaNotPlanarFlag, intra_luma_planar_flag, etc.

According to an embodiment of the present disclosure, when a template region-based derivation method and a gradient-based derivation method are not applied, a MPM-based derivation method may be applied. When a MPM-based derivation method is applied, a flag indicating whether a MPM is used may be signaled (or parsed) first. If the flag indicates that a MPM is used, a planar flag may be signaled. An intra prediction mode may be determined as a planar mode according to a planar flag value, or as an additional syntax element indicating an intra prediction mode within a primary MPM list (or group) because a planar mode is not used, a MPM index may be signaled.

In addition, when the above-described flag indicates that a MPM is not used, a flag indicating whether a secondary MPM is used may be signaled. If the flag indicates that a secondary MPM is used, a syntax element secondary MPM index indicating an intra prediction mode within a secondary MPM list (or group) may be signaled. If the flag indicates that a secondary MPM is not used, a syntax element (an index) indicating an intra prediction mode may be signaled within the remaining intra prediction mode list (or group) excluding a MPM.

Below, a method for adaptively signaling a planar flag based on whether to use DIMD and/or TIMD will be described. In other words, for adaptive signaling of a planar flag, a condition for signaling (or parsing) of a planar flag may be defined.

As an example, if TIMD is activated and a TIMD mode (i.e., a mode derived by TIMD) is a planar mode, signaling of a planar flag may be skipped. In other words, when TIMD is activated and a TIMD mode is a planar mode, it may represent that TIMD is not selected even though it is activated. Accordingly, in this case, a selection probability of a planar may be considered low, and signaling of a planar flag may be skipped. If signaling of a planar flag is skipped, parsing for a MPM index may be performed. A planar flag may be inferred as a value indicating that a planar mode is not used. For example, if parsing for intra_luma_not_planar_flag is skipped, intra_luma_not_planar_flag may be inferred as 1.

In addition, as an example, if a DIMD is activated and a DIMD mode (i.e., a mode derived by a DIMD) is a planar mode, signaling of a planar flag may be skipped. In other words, when DIMD is activated and a DIMD mode is a planar mode, it may represent that DIMD is not selected even though it is activated. Accordingly, in this case, a selection probability of a planar may be considered low, and signaling of a planar flag may be skipped. If signaling of a planar flag is skipped, parsing for a MPM index may be performed. A planar flag may be inferred as a value indicating that a planar mode is not used. For example, if parsing for intra_luma_not_planar_flag is skipped, intra_luma_not_planar_flag may be inferred as 1.

In addition, as described above, TIMD and DIMD may derive at least one mode according to a pre-configured condition. When there are at least two intra prediction modes derived by TIMD, a predictor (or a prediction sample) may be generated by combining two intra prediction modes derived. In the present disclosure, the combination may be referred to as (or expressed as) a weighted sum or blending. If there are at least two intra prediction modes derived by DIMD, a predictor may be generated by combining two intra prediction modes derived and a planar mode. In other words, since the same predictor as a planar mode may be generated only when a mode derived by TIMD and/or DIMD is a planar mode and does not combine a predictor generated by at least two prediction modes at the same time, whether to signal a planar flag may be determined by considering whether it is combined by at least two prediction modes.

In other words, as an example, when TIMD is activated, a TIMD mode (i.e., a mode derived by TIMD) is a planar mode and there are at least two intra prediction modes derived by TIMD, signaling of a planar flag may be skipped. In other words, when TIMD is activated, a TIMD mode is a planar mode and blending is performed, it may represent that TIMD is not selected even though it is activated. Accordingly, in this case, a selection probability of a planar may be considered low, and signaling of a planar flag may be skipped. If signaling of a planar flag is skipped, parsing for a MPM index may be performed.

In addition, as an example, when DIMD is activated, a DIMD mode (i.e., a mode derived by DIMD) is a planar mode and there are at least two intra prediction modes derived by DIMD, signaling of a planar flag may be skipped. In other words, when DIMD is activated, a DIMD mode is a planar mode and blending is performed to generate a prediction sample, it may represent that DIMD is not selected even though it is activated. Accordingly, in this case, a selection probability of a planar may be considered low, and signaling of a planar flag may be skipped. If signaling of a planar flag is skipped, parsing for a MPM index may be performed.

In addition, in an embodiment of the present disclosure, when a template region-based derivation method or a gradient-based derivation method is not selected, a method for deriving an intra prediction mode by allocating a low priority to a mode derived by a template region-based derivation method or a gradient-based derivation method is proposed. In other words, when TIMD and/or DIMD is selected even though it is activated, a method for allocating a low priority to a TIMD mode and/or a DIMD mode is proposed.

A mode that a mode derived by DIMD or TIMD is the same as an existing intra prediction mode may be supported. In addition to a planar mode, when a template region or a reconstructed neighboring region is plain or when only one gradient is obtained, the same mode as a DIMD/TIMD mode may be derived through syntax signaling.

In this case, in order for a corresponding intra prediction mode to be selected, it may be seen that when it is selected based on DIMD and/or TIMD, the fewest bits are used in terms of probability. As an example, since a probability is the lowest that a corresponding intra prediction mode is selected through syntax signaling instead of DIMD and/or TIMD, relatively few bits may be allocated to other intra prediction modes by placing a corresponding mode at a lower priority within the remaining mode group by considering it. Below, an example of a MPM-based intra prediction mode derivation method will be described.

FIG. 5 is a flowchart illustrating a method for configuring a MPM candidate list according to an embodiment of the present disclosure.

A method for configuring a MPM candidate list according to an embodiment of the present disclosure is described by referring to FIG. 5, but the present disclosure is not limited thereto, and of course, some steps or some operations may be added or omitted. In the present disclosure, a MPM candidate list may be referred to as a MPM list, a candidate list, etc., and as described above, a MPM candidate list may include a primary MPM candidate list, a secondary MPM candidate list, etc. In describing an embodiment of FIG. 5, it is mainly described that a method for configuring a MPM candidate list is performed by a decoding device, but it may be also performed substantially in the same manner as by an encoding device.

Referring to FIG. 5, a decoding device may insert a default mode into a MPM list S500. For example, a default mode may be configured as a non-directional mode. For example, a default mode may be configured as a planar mode or a DC mode. For example, when it is configured as a planar mode, index 0 may be allocated to a planar mode in a MPM list. Alternatively, a planar mode may not be configured by being included in a MPM list, and whether to use it may be determined through signaling of a planar flag. In this case, index 0, the lowest index value, may be allocated to a lower priority intra prediction mode of a planar mode.

A decoding device may insert an intra prediction mode (or an intra mode) of a neighboring block into a MPM list S510. A decoding device may insert an intra prediction mode of a left block or a top block into a MPM list. As an example, a left block may be a bottom-left block, and a top block may be a top-right block. In addition, the block may be a coding block, a prediction block, or a transform block. The consideration order of a left block or a top block may be determined by comparing the size of a width and a height of a current block. Availability may be checked prior to inserting an intra prediction mode of a left block or a top block into a MPM list. In addition, redundancy check may be performed to see if an intra prediction mode to be inserted was already inserted into a MPM list. Whether a left block or a top is a TIMD mode (or whether TIMD is applied) may be confirmed. An intra prediction mode of a left block or a top block may be inserted into a MPM list based on whether it is a TIMD mode. As an example, for a TIMD mode, a prediction mode that maps 131 prediction modes to 67 prediction modes may be inserted into a MPM list.

A decoding device may insert a derivation mode-based intra prediction mode into a MPM list S520. Specifically, if a DIMD mode is available, a decoding device may insert a DIMD mode, and if a DIMD blend mode is available, a decoding device may insert a DIMD blend mode. Here, a DIMD mode represents an intra prediction mode derived by DIMD. A DIMD blend mode represents a mode that prediction is performed by combining at least two intra prediction modes derived by DIMD.

A decoding device may insert an additional intra prediction mode into a MPM list S520. As an example, the additional intra prediction mode may represent a modified intra prediction mode derived based on an intra prediction mode previously included (or inserted) in a MPM list. Specifically, a decoding device may first use an intra prediction mode with a relatively low index among the intra prediction modes included in a MPM list. For example, within a MPM list, a candidate with an index value of 1 may be used first. Whether a candidate prediction mode is a directional prediction mode may be confirmed, and a mode derived through a predefined operation in a candidate prediction mode may be inserted into a MPM list.

For example, the predefined operation may be defined as in Equation 1 below.

$$[\text{Equation 1}]$$

$$(\text{MPM}[i] + \text{offset} - \text{index})\%\text{mod} + N$$

Referring to Equation 1, % operation may be performed based on a mod variable for a valud obtained by adding an offset to and subtracting an index variable from a prediction mode of a candidate having an index value of i. Finally, a value obtained by adding N may be inserted into a MPM list. In this case, redundancy check may be performed to see if a mode was already added to the existing MPM list. A candidate with an index value of i is a i-th candidate, and it may be considered in a modified intra prediction mode starting from a high priority candidate with a low index value. An offset and an index may be a predefined value. As an example, an offset may be 0, a negative integer or a positive integer, and an index may have a value 0, 1, 2, or 3.

If the number of candidates in a MPM list is less than the maximum number, a predefined default mode may be added. In other words, as an example, the additional intra prediction mode may be one or more predefined default modes. For example, a default mode group may be defined in advance, and a prediction mode allocated a low index value within a default mode group may be sequentially inserted into a MPM list until the maximum number of MPM lists is satisfied. For example, the default mode group may be defined as in Table 3 below.

[Table 3]

| Intra mode | index |
|---|---|
| DC | 1 |
| VER | 2 |
| HOR | 3 |
| VER-4 | 4 |
| VER+4 | 5 |
| 14 | 6 |
| 22 | 7 |
| 42 | 8 |
| 58 | 9 |
| 10 | 10 |
| 26 | 11 |
| 38 | 12 |
| 62 | 13 |
| 6 | 14 |
| 30 | 15 |
| 34 | 16 |
| 66 | 17 |
| 2 | 18 |
| 48 | 19 |
| 52 | 20 |
| 16 | 21 |

Below, a method for configuring a MPM list by considering a DIMD mode or a TIMD mode will be described. As an embodiment, a method described above in FIG. 5 may be applied. For example, a MPM list is configured according to a method described above in FIG. 5, but an operation of inserting a DIMD or TIMD mode may be added. A description that overlaps with a method described above in FIG. 5 is omitted.

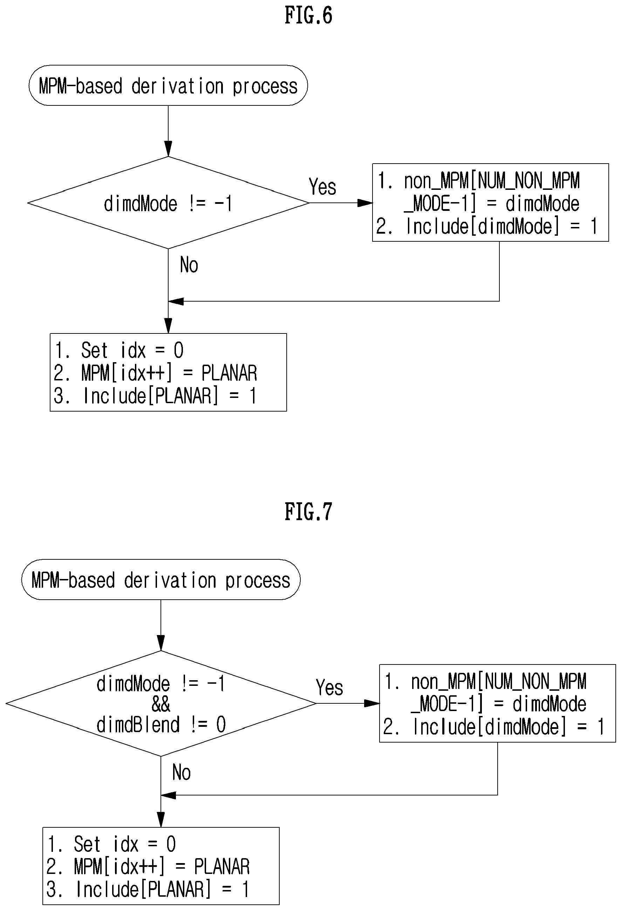

FIG. 6 is a flowchart illustrating a method for configuring a MPM candidate list according to an embodiment of the present disclosure.

In describing an embodiment of FIG. 6, it is mainly described that a method for configuring a MPM candidate list is performed by a decoding device, but the present disclosure is not limited thereto, and it may be also performed substantially in the same manner as by an encoding device.

Referring to FIG. 6, a decoding device may confirm whether DIMD is available. As a result of confirmation, if DIMD is available, a decoding device may insert a mode derived by DIMD, i.e., a DIMD mode, into a non-MPM list. In the present disclosure, the non-MPM list may represent the remaining mode list (or the remaining mode group) excluding a MPM list. In this case, an index with a last priority may be allocated to a DIMD mode inserted into a non-MPM list.

In FIG. 6, NUM_NON_MPM_MODE shows the number of remaining modes. For example, when 67 intra prediction modes are used, 6 MPM modes and 16 secondary MPM modes may be used. In this case, NUM_NON_MPM_MODE may have a value of 45. However, it is an example, and the number of each candidate list may vary. "dimdMode != -1" may mean whether DIMD (or a DIMD mode) is available. For example, a TIMD/DIMD mode (or whether TIMD/DIMD is applied) may be turned on/off in a high level syntax (e.g., a SPS/a PPS/a slice header, etc.). For example, if DIMD is turned off in a high level syntax, dimdMode may have a value of "-1". In addition, for example, "-1" may represent an initial value or an initialized value.

A decoding device may insert a DIMD mode into a non-MPM list, and configure that the DIMD mode is inserted (i.e., Include [dimdMode] = 1) . If DIMD is not available or if a DIMD mode is inserted into a non-MPM list as a low priority, a decoding device may perform a MPM list configuration process described above. As an example, a method described above in FIG. 5 may be applied.

FIG. 7 is a flowchart illustrating a method for configuring a MPM candidate list according to an embodiment of the present disclosure.

In describing an embodiment of FIG. 7, it is mainly described that a method for configuring a MPM candidate list is performed by a decoding device, but the present disclosure is not limited thereto, and it may be also performed substantially in the same manner as by an encoding device. A method described above in an embodiment of FIG. 6 may be applied in the same way. Any related overlapping description is omitted..

If there are at least two intra prediction modes derived by DIMD, a prediction sample may be generated by combining a predictor based on two intra prediction modes derived. In the present disclosure, the combination may be referred to as (or expressed as) a weighted sum or blending. Alternatively, when there are at least two intra prediction modes derived by DIMD, a prediction sample may be generated by combining two intra prediction modes derived and a planar mode. Since the same predictor as a mode derived through syntax signaling is generated only when blending is not performed, in this embodiment, a case in which blending is not performed may be considered as a condition for adding a DIMD mode. In the present disclosure, the blending may be referred to as combination prediction or weighted sum prediction.

Referring to FIG. 7, a decoding device may confirm whether DIMD is available and whether DIMD combination prediction is performed. As a result of confirmation, if DIMD is available and DIMD combination prediction is not performed, a decoding device may insert a DIMD mode into a non-MPM list. In the present disclosure, the non-MPM list may represent the remaining mode list (or the remaining mode group) excluding a MPM list. In this case, an index with a last priority may be allocated to a DIMD mode inserted into a non-MPM list.

In addition, in an embodiment, in inserting a DIMD mode into a non-MPM list, a decoding device may additionally consider a reference sample line index other than whether DIMD is available and whether DIMD combination prediction is performed. As described above, only when DIMD combination prediction is not performed, the same predictor as an intra prediction mode derived by syntax signaling may be generated. In addition, only when an adjacent reference sample line is used (i.e., MRL index == 0), the same predictor as an intra prediction mode derived by syntax signaling may be generated.

Accordingly, a decoding device may confirm whether DIMD is available, whether DIMD combination prediction is performed and whether of MRL index == 0. As a result of confirmation, if 1) DIMD is available, 2) DIMD combination prediction is not performed and 3) an adjacent reference sample line is used, a decoding device may insert a DIMD mode into a non-MPM list.

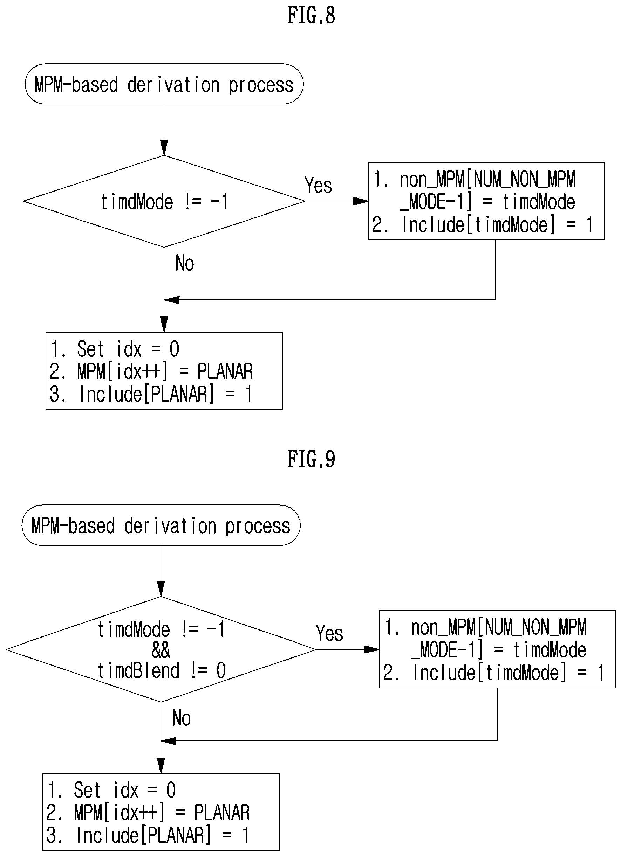

FIG. 8 is a flowchart illustrating a method for configuring a MPM candidate list according to an embodiment of the present disclosure.

In describing an embodiment of FIG. 8, it is mainly described that a method for configuring a MPM candidate list is performed by a decoding device, but the present disclosure is not limited thereto, and it may be also performed substantially in the same manner as by an encoding device.

Referring to FIG. 8, a decoding device may confirm whether TIMD is available. As a result of confirmation, if TIMD is available, a decoding device may insert a mode derived by TIMD, i.e., a TIMD mode, into a non-MPM list. In the present disclosure, the non-MPM list may represent the remaining mode list (or the remaining mode group) excluding a MPM list. In this case, an index with a last priority may be allocated to a TIMD mode inserted into a non-MPM list.

In FIG. 8, NUM_NON_MPM_MODE shows the number of remaining modes. For example, when 67 intra prediction modes are used, 6 MPM modes and 16 secondary MPM modes may be used. In this case, NUM_NON_MPM_MODE may have a value of 45. However, it is an example, and the number of each candidate list may vary. "timdMode != -1" may mean whether TIMD (or a TIMD mode) is available. For example, a TIMD/DIMD mode (or whether TIMD/DIMD is applied) may be turned on/off in a high level syntax (e.g., a SPS/a PPS/a slice header, etc.). For example, if TIMD is turned off in a high level syntax, timdMode may have a value of "-1". In addition, for example, "-1" may represent an initial value or an initialized value.

A decoding device may insert a TIMD mode into a non-MPM list, and configure that the TIMD mode is inserted (i.e., Include [dimdMode] = 1) . If TIMD is not available or if a TIMD mode is inserted into a non-MPM list as a low priority, a decoding device may perform a MPM list configuration process described above. As an example, a method described above in FIG. 5 may be applied.

FIG. 9 is a flowchart illustrating a method for configuring a MPM candidate list according to an embodiment of the present disclosure.

In describing an embodiment of FIG. 9, it is mainly described that a method for configuring a MPM candidate list is performed by a decoding device, but the present disclosure is not limited thereto, and it may be also performed substantially in the same manner as by an encoding device. A method described above in an embodiment of FIG. 6 may be applied in the same way. Any related overlapping description is omitted.

If there are at least two intra prediction modes derived by TIMD, a prediction sample may be generated by combining a predictor based on two intra prediction modes derived. In the present disclosure, the combination may be referred to as (or expressed as) a weighted sum or blending. Alternatively, when there are at least two intra prediction modes derived by TIMD, a prediction sample may be generated by combining two intra prediction modes derived and a planar mode. Since the same predictor as a mode derived through syntax signaling is generated only when blending is not performed, in this embodiment, a case in which blending is not performed may be considered as a condition for adding a TIMD mode. In the present disclosure, the blending may be referred to as combination prediction or weighted sum prediction.

Referring to FIG. 9, a decoding device may confirm whether TIMD is available and whether TIMD combination prediction is performed. As a result of confirmation, if TIMD is available and TIMD combination prediction is not performed, a decoding device may insert a TIMD mode into a non-MPM list. In the present disclosure, the non-MPM list may represent the remaining mode list (or the remaining mode group) excluding a MPM list. In this case, an index with a last priority may be allocated to a TIMD mode inserted into a non-MPM list.

In addition, in an embodiment, in inserting a TIMD mode into a non-MPM list, a decoding device may additionally consider a reference sample line index other than whether TIMD is available and whether TIMD combination prediction is performed. As described above, only when TIMD combination prediction is not performed, the same predictor as an intra prediction mode derived by syntax signaling may be generated. In addition, only when an adjacent reference sample line is used (i.e., MRL index == 0), the same predictor as an intra prediction mode derived by syntax signaling may be generated.

Accordingly, a decoding device may confirm whether TIMD is available, whether TIMD combination prediction is performed and whether of MRL index == 0. As a result of confirmation, if 1) TIMD is available, 2) TIMD combination prediction is not performed and 3) an adjacent reference sample line is used, a decoding device may insert a TIMD mode into a non-MPM list.

According to an embodiment described above in FIG. 6 to FIG. 9, a DIMD/TIMD mode may be preferentially inserted into a non-MPM list prior to performing a MPM list configuration process described above in FIG. 5. According to an embodiment of the present disclosure, a MPM list may be configured by considering an inserted DIMD/TIMD mode.

As an example, during a MPM list configuration process, if a condition in Equation 2 below is satisfied, a DIMD mode may be inserted into a MPM list.

$$[\text{Equation 2}]$$

$$\text{dimMode} \mathrel{!=} -1 \;\&\&\; \text{Include}[\text{dimdMode}] == 0$$

Referring to Equation 2, a decoding device may confirm whether DIMD (or a DIMD mode) is available and whether whether DIMD (or a DIMD mode) is included in a MPM list and/or a non-MPM list. As a result of confirmation, if DIMD is available and if a DIMD mode is not included in a MPM list and a non-MPM list, a decoding device may add a DIMD mode to a MPM list. If dimdMode is 0 in an Include [ ] array, i.e., if a DIMD mode is not processed before a corresponding process, it may be added to a MPM list.

In addition, as an example, during a MPM list configuration process, if a condition in Equation 3 below is satisfied, a TIMD mode may be inserted into a MPM list.

$$[\text{Equation 3}]$$

$$\text{timMode} \mathrel{!=} -1 \;\&\&\; \text{Include}[\text{timdMode}] == 0$$

Referring to Equation 2, a decoding device may confirm whether TIMD (or a TIMD mode) is available and whether whether DIMD (or a DIMD mode) is included in a MPM list and/or a non-MPM list. As a result of confirmation, if TIMD is available and if a TIMD mode is not included in a MPM list and a non-MPM list, a decoding device may add a TIMD mode to a MPM list. If timdMode is 0 in an Include [ ] array, i.e., if a TIMD mode is not processed before a corresponding process, it may be added to a MPM list.

In addition, in an embodiment described above in FIGS. 6 and 7, even when a DIMD mode is a planar mode, it was described on the assumption that a planar mode is added as a first mode in a MPM list. By configuring a list in this way, an existing planar mode syntax element may be used without any change. In another embodiment, a method for configuring a MPM list is proposed by considering a case in which a DIMD mode is a planar mode.

In other words, a decoding device may confirm a condition for inserting a DIMD mode and add a DIMD mode to a non-MPM list according to an embodiment described above in FIGS. 6 and 7. In this case, instead of performing a MPM list configuration process described above in FIG. 5 by configuring a value of idx as 0 and inserting a planar mode into a MPM list as described above, a decoding device confirms whether a planar mode is inserted as a candidate (whether of (Include[PLANAR] == 0), and may insert a planar mode into a MPM list only when a planar mode is not inserted as a candidate. In this case, a syntax element (a flag) indicating whether a planar mode is used may be removed from a syntax table as in Table 4 below.

[Table 4]

| if( intra_luma_ref_idx[ x0 ][ y0 ] = = 0 && intra_subpartitions_mode_flag[ x0 ][ y0 ] = = 0 ) | |
|---|---|
| **intra_luma_mpm_flag[** x0 ][ y0 ] | ae(v) |
| if( intra_luma_mpm_flag[ x0 ][ y0 ]) { | |
| | ae(v) |
| | |
| **intra_luma_mpm_idx[** x0 ][ y0 ] | ae(v) |
| } else | |
| **intra_luma_mpm_remainder[** x0 ][ y0 ] | ae(v) |

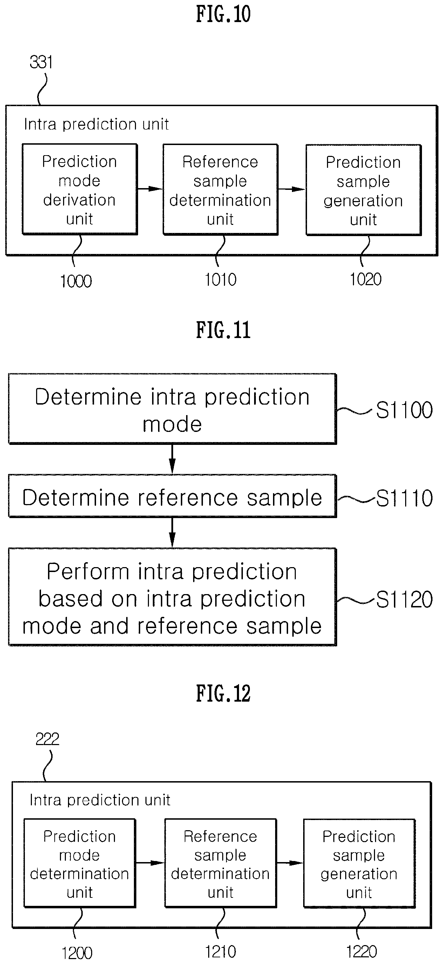

FIG. 10 shows a rough configuration of an intra prediction unit 331 that performs an intra prediction method according to the present disclosure.

Referring to FIG. 10, an intra prediction unit 331 may include a prediction mode derivation unit 1000, a reference sample determination unit 1010, and a prediction sample generation unit 1020.

A prediction mode derivation unit 1000 may derive an intra prediction mode of a current block.

An intra prediction mode of a current block may be derived from intra prediction modes that are pre-defined in a decoding device. An intra prediction mode of a current block may be derived based on a MPM, may be derived based on a reconstructed sample around a current block or may be derived based on a template region of a current block. It is the same as described by referring to FIG. 4, and a detailed description is omitted here.

As described above, a prediction mode derivation unit 1000 may not signal (or parse) a planar flag indicating whether to use a planar mode when TIMD and/or DIMD is not selected even though TIMD and/or DIMD is activated and a predictor may be generated based on a planar mode.

In addition, in deriving an intra prediction mode based on a MPM, a prediction mode derivation unit 1000 may allocate a relatively low priority (or a high index) to a mode derived by TIMD and/or DIMD when TIMD and/or DIMD is not selected. It is the same as described by referring to FIG. 5 to FIG. 9, and a detailed description is omitted here.

A reference sample determination unit 1010 may determine a reference sample for intra prediction of a current block from one or more reference sample lines. To this end, a reference sample determination unit 1010 may select one or more reference sample lines from a plurality of reference sample line candidates that are pre-defined equally for an encoding device and a decoding device. Predetermined index information may be used to select a reference sample line, which is the same as described by referring to FIG. 4.

A prediction sample generation unit 1020 may perform intra prediction of a current block based on a reference sample and an intra prediction mode of a current block. A specific intra prediction method is the same as described by referring to FIG. 4, and an overlapping description is omitted here.

FIG. 11 shows an intra prediction method performed by an encoding device as an embodiment according to the present disclosure.

Referring to FIG. 11, an intra prediction mode of a current block may be determined S1100.

An intra prediction mode of a current block may be determined from intra prediction modes that are pre-defined in an encoding device. An intra prediction mode of a current block may be determined based on a MPM, or may be determined based on a gradient of a neighboring region of a current block, or may be determined based on a cost of a template region of a current block.

MPM-based Determination Method

According to a MPM-based determination method, an optimal intra prediction mode for a current block may be determined, and intra prediction mode information for specifying this may be encoded into a bitstream. In this way, it may be distinguished from a template region-based determination method described later in that intra prediction mode information is encoded and transmitted to a decoding device.

Intra prediction modes that are pre-defined in an encoding device may be divided into K groups. Here, K may be an integer of 2, 3, 4, or more. As an example, the pre-defined intra prediction modes may be divided into three groups, and a method for configuring three groups is as described in FIG. 4.

One or more flags may be encoded into a bitstream to specify a group and/or a sub-group to which the same mode as an intra prediction mode of a current block belongs. Here, a flag may include at least one of a first flag indicating whether the same mode as an intra prediction mode of a current block belongs to a first group, a second flag indicating whether the same mode as an intra prediction mode of a current block belongs to a second group (i.e., a MPM list), a third flag indicating whether the same mode as an intra prediction mode of a current block belongs to a primary MPM list, or a fourth flag indicating whether the same mode as an intra prediction mode of a current block belongs to a secondary MPM list.

If an intra prediction mode of a current block belongs to a second group, an index specifying any one of a plurality of MPMs belonging to a second group may be encoded into a bitstream. The index may specify a MPM that is the same as an intra prediction mode of a current block among a plurality of MPMs belonging to a second group. Alternatively, when an intra prediction mode of a current block belongs to a primary MPM list, an index specifying any one of a plurality of MPMs belonging to a primary MPM list may be encoded into a bitstream. The index may specify a MPM that is the same as an intra prediction mode of a current block among a plurality of MPMs belonging to a primary MPM list. Alternatively, when an intra prediction mode of a current block belongs to a secondary MPM list, an index specifying any one of a plurality of MPMs belonging to a secondary MPM list may be encoded into a bitstream. The index may specify a MPM that is the same as an intra prediction mode of a current block among a plurality of MPMs belonging to a secondary MPM list. Similarly, if an intra prediction mode of a current block belongs to a first group (or a third group), an index specifying any one of a plurality of intra prediction modes belonging to a first group (or a third group) may be encoded into a bitstream. The index may specify the same mode as an intra prediction mode of a current block among a plurality of intra prediction modes belonging to a first group (or a third group). However, when a first group (or a third group) consists of one intra prediction mode, encoding of the index may be omitted.

The above-described flag may be encoded with dependency between flags. As an example, a first flag may be encoded after a second flag is encoded into a bitstream. A first flag may be encoded when a second flag is True. Alternatively, a second flag may be encoded after a first flag is encoded into a bitstream. A second flag may be encoded when a first flag is False. If a second flag is True, a third flag (or, a fourth flag) may be encoded into a bitstream, and if a second flag is False, a third flag (or, a fourth flag) may not be encoded into a bitstream. Alternatively, a fourth flag may be encoded after a third flag is encoded into a bitstream. A fourth flag may be encoded when a third flag is False.

Gradient-based Determination Method

A gradient may be calculated based on at least two samples belonging to a neighboring region of a current block. Based on at least one of the calculated gradient or an amplitude of a gradient, an intra prediction mode of a current block may be determined. Through this determination method, one intra prediction mode may be derived for a current block, or at least two intra prediction modes may be derived. A specific gradient-based determination method is the same as described by referring to FIG. 4, and an overlapping description is omitted here.

Whether an intra prediction mode of a current block is determined based on a gradient calculated from a neighboring region adjacent to a current block may be determined. Based on a result of the determination, a predetermined flag (Dimd_flag) may be encoded into a bitstream. Here, a flag may indicate whether an intra prediction mode of a current block is determined based on a gradient calculated from a neighboring region adjacent to a current block.

However, the flag may be encoded into a bitstream based on at least one of 1) whether a gradient-based derivation method is available, 2) whether a luma component of a current block is valid, 3) whether a prediction mode of a current block is an intra mode, or 4) whether a component type of a current block is a luma component.

Whether a gradient-based derivation method is available may be determined based on a flag encoded at at least one level of a video sequence, a picture, a picture header, or a slice header.

If a current block is a luma block in a dual tree type or a single tree type, a luma component of a current block may be determined to be valid. On the other hand, if a current block is a chroma block in a dual tree type, a luma component of a current block may be determined to be invalid. Here, a single tree type may refer to a tree type in which a chroma block of a coding unit has a partition structure that is dependent on a partition structure of a luma block, and a dual tree type may refer to a tree type in which a chroma block of a coding unit has a partition structure that is independent of a luma block.

Even if a current block is a single tree type, if a current block is a chroma block, whether a component type of a current block is a luma component may be determined to be False. On the other hand, even if a current block is a single tree type, if a current block is a luma block, whether a component type of a current block is a luma component may be determined to be True. If a current block is a luma block in a dual tree type, whether a component type of a current block is a luma component may be determined to be True, and if a current block is a chroma block in a dual tree type, whether a component type of a current block is a luma component may be determined to be False.

As an example, as described in Table 1, the flag (Dimd_flag) may be encoded into a bitstream when 1) a gradient-based derivation method is available for a video sequence to which a current block belongs, 2) a luma component is valid for a current block, 3) a prediction mode of a current block is an intra mode, 4) a component type of a current block is a luma component.

In this case, if an intra prediction mode of a current block is determined through a gradient-based determination method, the flag may be encoded into 1, and if an intra prediction mode of a current block is determined through a MPM-based determination method, the flag may be encoded into 0.

Meanwhile, if a condition according to Table 1 is not satisfied, the flag may not be encoded into a bitstream. In this case, the flag may be driven to 0, and an intra prediction mode of a current block may be determined through a MPM-based determination method.

If a neighboring block of a current block is not available, a neighboring region for calculating a gradient may not be configured. In this case, since an amplitude of all gradients is 0, a pre-configured initial intra prediction mode may be used as an intra prediction mode of a current block. In this case, a value of a pre-configured initial intra prediction mode may be configured as 0, which corresponds to a planar mode. In other words, even if a flag encoded according to a condition in Table 1 is 1, if a neighboring block of a current block is not available, a gradient-based determination method may not be used, and an intra prediction mode of a current block may be configured as a planar mode, a pre-configured mode.

Template Region-based Determination Method

In terms of an encoder, an intra prediction mode may be derived based on a template region adjacent to a current block. In other words, for predetermined candidate modes, a cost of a template region may be calculated. Here, a cost may be calculated as a SAD or a SATD between prediction samples and original samples (or, reconstructed samples) in a template region. One or more candidate modes with the minimum cost among costs calculated for the candidate modes may be selected. Based on the selected one or more candidate modes, an intra prediction mode of a current block may be configured. A specific template region-based determination method is the same as described by referring to FIG. 4, and an overlapping description is omitted here.

Whether an intra prediction mode of a current block is determined based on a cost calculated from a template region of a current block may be determined. Based on the determination result, a predetermined flag (Timd_flag) may be encoded into a bitstream. Here, a flag may indicate whether an intra prediction mode of a current block is determined based on a cost calculated from a template region of a current block. As an example, if an intra prediction mode of a current block is determined through a template region-based determination method, the flag may be encoded into a first value, and otherwise, the flag may be encoded into a second value.

However, the flag may be encoded into a bitstream based on at least one of 1) whether a template region-based derivation method is available, 2) whether a luma component of a current block is valid, 3) whether a prediction mode of a current block is an intra mode, 4) whether a component type of a current block is a luma component, 5) whether a size of a current block is larger than a predetermined threshold size, 6) whether a slice to which a current block belongs is slice I, or 7) whether a gradient-based derivation method is applied.

Whether the template region-based derivation method is available may be determined based on a flag encoded at at least one level of a video sequence, a picture, a picture header, or a slice header.

If a current block is a luma block in a dual tree type or a single tree type, it may be determined that a luma component of a current block is valid. On the other hand, if a current block is a chroma block in a dual tree type, it may be determined that a luma component of a current block is invalid. Here, a single tree type may refer to a tree type in which a chroma block of a coding unit has a partition structure that is dependent on a partition structure of a luma block, and a dual tree type may refer to a tree type in which a chroma block of a coding unit has a partition structure that is independent of a luma block.

Even if a current block is a single tree type, if a current block is a chroma block, whether a component type of a current block is a luma component may be determined to be False. On the other hand, even if a current block is a single tree type, if a current block is a luma block, whether a component type of a current block is a luma component may be determined to be True. If a current block is a luma block in a dual tree type, whether a component type of a current block is a luma component may be determined to be True, and if a current block is a chroma block in a dual tree type, whether a component type of a current block is a luma component may be determined to be False.

In terms of an encoding device, the gradient-based derivation method may refer to a method for deriving an intra prediction mode based on a gradient calculated from a neighboring region of a current block.

As an example, as described in Table 1, the flag (Timd_flag) may be encoded into a bitstream when 1) a template region-based derivation method is available for a video sequence to which a current block belongs, 2) a luma component is valid for a current block, 3) a prediction mode of a current block is an intra mode, 4) a component type of a current block is a luma component, 5) a product of a width and a height of a current block is smaller than 1024, 6) a type of a slice to which a current block belongs is slice I, or 7) a gradient-based derivation method is applied to a current block.

In this case, if an intra prediction mode of a current block is determined through a template region-based determination method, the flag may be encoded into 1, and otherwise (e.g., if an intra prediction mode of a current block is determined through a MPM-based determination method), the flag may be encoded into 0.

Meanwhile, if a condition according to Table 1 is not satisfied, the flag may not be encoded into a bitstream. In this case, the flag may be driven to 0, and an intra prediction mode of a current block may be determined through a MPM-based determination method.

If a neighboring block of a current block is not available, a template region for calculating a cost may not be configured. In this case, a pre-configured initial intra prediction mode may be used as an intra prediction mode of a current block. In this case, a value of a pre-configured initial intra prediction mode may be configured as 0, which corresponds to a planar mode. In other words, even if a flag encoded according to a condition in Table 1 is 1, if a neighboring block of a current block is not available, a template region-based determination method may not be used, and an intra prediction mode of a current block may be configured as a planar mode, a pre-configured mode.

When a template region-based determination method or a gradient-based determination method is enabled, an intra prediction mode determined by a template region-based determination method or a gradient-based determination method may be considered in preference to an intra prediction mode determined by a MPM-based determination method. Even if a template region-based determination method or a gradient-based determination method is enabled, if a template region-based determination method or a gradient-based determination method is not applied, it may be seen that there is a relatively high possibility that an intra prediction mode determined by a template region-based determination method or a gradient-based determination method is enabled, if a template region-based determination method is not used for intra prediction of a current block.

In an embodiment of the present disclosure, if a template region-based determination method or a gradient-based determination method is enabled, and a template region-based determination method or a gradient-based determination method is not selected even though a mode determined by a template region-based determination method or a gradient-based determination method is a planar mode, a method for not separately transmitting a flag indicating whether a planar mode is used for intra prediction is proposed. In the present disclosure, a mode determined by a template region-based determination method may be referred to as a template region-based determination mode or a TIMD mode. In addition, a mode determined by a gradient-based determination method may be referred to as a gradient-based determination mode or a DIMD mode.

If a template region-based determination method and/or a gradient-based determination method is not applied, the above-described MPM-based determination method may be applied. As an example, when a MPM-based determination method is applied, at least one of a primary MPM, a secondary MPM, or a remaining mode may be used in an intra prediction mode. Here, a MPM and a secondary MPM may be two sub-groups of a second group described above.

As described above, a gradient-based determination method may be used adaptively based on a DIMD flag, and a template region-based determination method may be used adaptively based on a TIMD flag. For a transmission condition of a DIMD flag and/or a TIMD flag, whether there is a reconstructed neighboring sample or a template region (or availability) may not be considered. Although an intra prediction mode may not be determined through a gradient or decoder-side RDO because a reconstructed neighboring sample or a template region is not available, a corresponding flag may be signaled. In an embodiment, when the above-described condition is satisfied, a default mode may be determined by a corresponding determination method. The default mode may be configured as a planar mode or a DC mode.

In other words, if a DIMD flag or a TIMD flag is signaled with a value of 1 when a reconstructed neighboring sample or a template region is not available, a prediction block may be generated by configuring an intra prediction mode as a planar mode without separate additional syntax signaling for determining an intra prediction mode. Alternatively, if a corresponding region is completely plain even if a template region or a neighboring region is available, a gradient may not be calculated, so even in this case, prediction may be performed by using a pre-configured default mode. The default mode may be configured as a planar mode or a DC mode.

When a prediction block is generated in a planar mode according to the above-described process, it may have the effect of generating the same prediction block as a planar mode of a MPM list. In other words, a default mode may be configured as a planar mode because a reconstructed neighboring region or a template region is not available, and when a DIMD flag and a TIMD flag are 0, it may show that a planar mode may not be selected. Nevertheless, if a flag (e.g., intra_luma_not_planar_flag) indicating whether a planar mode is used for intra prediction is signaled as before, efficiency may be reduced in terms of prediction performance.

Accordingly, according to an embodiment of the present disclosure, in order to solve this problem, even if TIMD or DIMD is activated and a predictor may be generated based on a planar mode, if a flag value for selecting TIMD or DIMD is transmitted as 0 and a corresponding mode is not selected, a method for avoiding signaling a flag indicating whether to use a planar mode is proposed. In the present disclosure, a flag indicating whether to use (or apply) a planar mode is collectively referred to as a planar flags. The planar flag may be referred to as intra_luma_not_planar_flag, intraLumaPlanarFlag, intraLumaNotPlanarFlag, intra_luma_planar_flag, etc.

According to an embodiment of the present disclosure, when a template region-based determination method and a gradient-based determination method are not applied, a MPM-based determination method may be applied. When a MPM-based determination method is applied, a flag indicating whether a MPM is used may be signaled (or parsed) first. If the flag indicates that a MPM is used, a planar flag may be signaled. An intra prediction mode may be determined as a planar mode according to a planar flag value, or as an additional syntax element indicating an intra prediction mode within a primary MPM list (or group) because a planar mode is not used, a MPM index may be signaled.

In addition, when the above-described flag indicates that a MPM is not used, a flag indicating whether a secondary MPM is used may be signaled. If the flag indicates that a secondary MPM is used, a syntax element secondary MPM index indicating an intra prediction mode within a secondary MPM list (or group) may be signaled. If the flag indicates that a secondary MPM is not used, a syntax element (an index) indicating an intra prediction mode may be signaled within the remaining intra prediction mode list (or group) excluding a MPM.

A method for adaptively signaling a planar flag based on whether to use DIMD and/or TIMD described above in FIG. 4 may be applied substantially in the same manner even in this embodiment, and a related overlapping description is omitted.

In addition, in an embodiment, if a template region-based determination method or a gradient-based determination method is not selected, an encoding device may determine an intra prediction mode by allocating a low priority to a mode determined by a template region-based determination method or a gradient-based determination method. In other words, if TIMD and/or DIMD is not selected even though TIMD and/or DIMD is activated, an encoding device may allocate a low priority to a TIMD mode and/or a DIMD mode.

A mode that a mode determined by DIMD or TIMD is the same as an existing intra prediction mode may be supported. In addition to a planar mode, if a template region or a reconstructed neighboring region is plain or if only one gradient is obtained, the same mode as a DIMD/TIMD mode may be determined through syntax signaling.

In this case, in order for a corresponding intra prediction mode to be selected, it may be seen that when it is selected based on DIMD and/or TIMD, the fewest bits are used in terms of probability. As an example, since a probability is the lowest that a corresponding intra prediction mode is selected through syntax signaling instead of DIMD and/or TIMD, relatively few bits may be allocated to other intra prediction modes by placing a corresponding mode at a lower priority within the remaining mode group by considering it. A method described above in FIG. 5 to FIG. 9 may be applied substantially in the same manner even in this embodiment, and a related overlapping description is omitted.

Referring to FIG. 11, a reference sample of a current block may be determined S1110.

A reference sample for intra prediction of a current block may be determined from one or more reference sample lines. A current block may use one reference sample line, or may use at least two reference sample lines.

A reference sample line for intra prediction of a current block may be selected from a plurality of reference sample line candidates that are pre-defined equally for an encoding device and a decoding device. The plurality of predefined reference sample line candidates may include at least one of a first reference sample line adjacent to a current block, a second reference sample line 1 sample away from a current block, a third reference sample line 2 samples away from a current block, or a fourth reference sample line 3 samples away from a current block.

Index information specifying a position of a reference sample line to which a reference sample of a current block belongs may be encoded into a bitstream. As an example, index information specifying any one of the plurality of reference sample line candidates may be encoded. Alternatively, when two reference sample lines are used for intra prediction of a current block, two index information specifying two reference sample lines among a plurality of reference sample line candidates may be encoded, respectively. Alternatively, as any one of the two reference sample lines is a default reference sample line, encoding of index information therefor may be omitted, and only index information for the other may be encoded. Here, a default reference sample line refers to a reference sample line at a pre-defined position equally for an encoding device and a decoding device, and for example, it may be a first reference sample line adjacent to a current block.

Meanwhile, a reference sample line of a current block may be used to determine an intra prediction mode of a current block, and in this case, S1110 may be performed before S1100.

Referring to FIG. 11, a prediction sample of a current block may be generated based on a reference sample and an intra prediction mode of a current block S1120.

A method for generating a prediction sample is the same as described by referring to FIG. 4, and a detailed description is omitted here. A residual sample, a difference between a prediction sample and an original sample of a current block, may be generated, and it may be encoded to generate a bitstream.

Meanwhile, a plurality of reference sample lines may be used for intra prediction of a current block, and in this case, a projected position may exist for each reference sample line. In other words, a plurality of samples at a projected position may be determined, and a prediction sample of a current block may be generated based on a weighted sum thereof.

When one intra prediction mode is derived for a current block through a MPM-based derivation method, intra prediction of a current block may be performed based on a corresponding intra prediction mode.

FIG. 12 shows a rough configuration of an intra prediction unit 222 that performs an intra prediction method according to the present disclosure.

Referring to FIG. 12, an intra prediction unit 222 may include a prediction mode determination unit 1200, a reference sample determination unit 1210, and a prediction sample generation unit 1220.

A prediction mode determination unit 1200 may determine an intra prediction mode of a current block.

An intra prediction mode of a current block may be determined from intra prediction modes that are pre-defined in an encoding device. An intra prediction mode of a current block may be determined based on a MPM, or may be determined based on a gradient of a neighboring region of a current block, or may be determined based on a cost of a template region of a current block. It is the same as described by referring to FIG. 11, and a detailed description is omitted here.

If TIMD and/or DIMD is not selected even though TIMD and/or DIMD is activated and a predictor may be generated based on a planar mode, a prediction mode determination unit 1200 may not encode a planar flag indicating whether to use a planar mode.

In addition, in determining an intra prediction mode based on a MPM, a prediction mode determination unit 1200 may allocate a relatively low priority (or a high index) to a mode derived by TIMD and/or DIMD when TIMD and/or DIMD is not selected. It is the same as described by referring to FIG. 5 to FIG. 9, and a detailed description is omitted here.

A reference sample determination unit 1210 may determine a reference sample for intra prediction of a current block from one or more reference sample lines. To this end, a reference sample determination unit 1210 may select one or more reference sample lines from a plurality of reference sample line candidates that are pre-defined equally for an encoding device and a decoding device. Predetermined index information specifying a selected reference sample line may be encoded into a bitstream.

A prediction sample generation unit 1220 may perform intra prediction of a current block based on a reference sample and an intra prediction mode of a current block. A specific intra prediction method is the same as described by referring to FIG. 6, and an overlapping description is omitted here.

In the above-described embodiment, methods are described based on a flowchart as a series of steps or blocks, but a corresponding embodiment is not limited to the order of steps, and some steps may occur simultaneously or in different order with other steps as described above. In addition, those skilled in the art may understand that steps shown in a flowchart are not exclusive, and that other steps may be included or one or more steps in a flowchart may be deleted without affecting the scope of embodiments of the present disclosure.

The above-described method according to embodiments of the present disclosure may be implemented in a form of software, and an encoding device and/or a decoding device according to the present disclosure may be included in a device which performs image processing such as a TV, a computer, a smartphone, a set top box, a display device, etc.

In the present disclosure, when embodiments are implemented as software, the above-described method may be implemented as a module (a process, a function, etc.) that performs the above-described function. A module may be stored in a memory and may be executed by a processor. A memory may be internal or external to a processor, and may be connected to a processor by a variety of well-known means. A processor may include an application-specific integrated circuit (ASIC), another chipset, a logic circuit and/or a data processing device. A memory may include a read-only memory (ROM), a random access memory (RAM), a flash memory, a memory card, a storage medium and/or another storage device. In other words, embodiments described herein may be performed by being implemented on a processor, a microprocessor, a controller or a chip. For example, functional units shown in each drawing may be performed by being implemented on a computer, a processor, a microprocessor, a controller or a chip. In this case, information for implementation (ex. information on instructions) or an algorithm may be stored in a digital storage medium.

In addition, a decoding device and an encoding device to which embodiment(s) of the present disclosure are applied may be included in a multimedia broadcasting transmission and reception device, a mobile communication terminal, a home cinema video device, a digital cinema video device, a surveillance camera, a video conversation device, a real-time communication device like a video communication, a mobile streaming device, a storage medium, a camcorder, a device for providing video on demand (VoD) service, an over the top video (OTT) device, a device for providing Internet streaming service, a three-dimensional (3D) video device, a virtual reality (VR) device, an argumente reality (AR) device, a video phone video device, a transportation terminal (ex. a vehicle (including an autonomous vehicle) terminal, an airplane terminal, a ship terminal, etc.) and a medical video device, etc., and may be used to process a video signal or a data signal. For example, an over the top video (OTT) device may include a game console, a blu-ray player, an Internet-connected TV, a home theater system, a smartphone, a tablet PC, a digital video recorder (DVR), etc.

In addition, a processing method to which embodiment(s) of the present disclosure are applied may be produced in a form of a program executed by a computer and may be stored in a computer-readable recording medium. Multimedia data having a data structure according to embodiment(s) of the present disclosure may be also stored in a computer-readable recording medium. The computer-readable recording medium includes all types of storage devices and distributed storage devices that store computer-readable data. The computer-readable recording medium may include, for example, a blu-ray disk (BD), an universal serial bus (USB), ROM, PROM, EPROM, EEPROM, RAM, CD-ROM, a magnetic tape, a floppy disk and an optical media storage device. In addition, the computer-readable recording medium includes media implemented in a form of a carrier wave (e.g., transmission via the Internet). In addition, a bitstream generated by an encoding method may be stored in a computer-readable recording medium or may be transmitted through a wired or wireless communication network.

In addition, embodiment(s) of the present disclosure may be implemented by a computer program product by a program code, and the program code may be executed on a computer by embodiment(s) of the present disclosure. The program code may be stored on a computer-readable carrier.

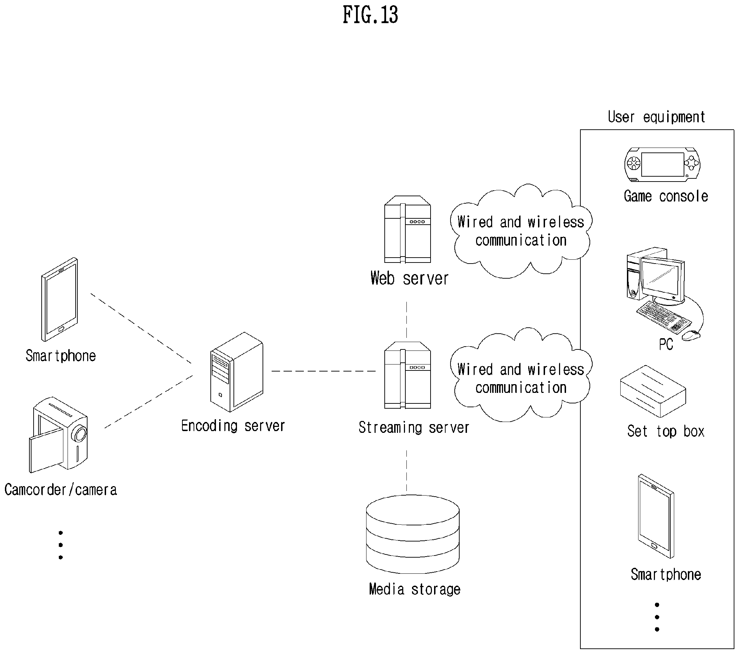

FIG. 13 shows an example of a contents streaming system to which embodiments of the present disclosure may be applied.

Referring to FIG. 13, a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

**Claims**

1. An image decoding method, the method comprising:

deriving an intra prediction mode of a current block based on a derivation mode, wherein the derivation mode includes at least one of a first derivation mode and a second derivation mode, the first derivation mode represents a mode for deriving the intra prediction mode of the current block based on a reconstructed neighboring sample of the current block, and the second derivation mode represents a mode for deriving the intra prediction mode of the current block based on a cost of a template region adjacent to the current block;
determining a reference sample of the current block; and
based on the intra prediction mode and the reference sample, generating a prediction sample of the current block.

2. The method of claim 1, wherein deriving the intra prediction mode of the current block includes:

   configuring a first candidate list including a plurality of MPM candidates; and
   configuring a second candidate list including remaining intra prediction modes excluding the plurality of MPM candidates.

3. The method of claim 2, wherein:
   an intra prediction mode derived by using the first derivation mode is added to the second candidate list based on whether a predefined condition is satisfied.

4. The method of claim 3, wherein:

   when the first derivation mode is activated, the intra prediction mode derived by using the first derivation mode is added to the second candidate list,
   a largest index is allocated to the intra prediction mode derived by using the first derivation mode among intra prediction modes included in the second candidate list.

5. The method of claim 3, wherein:

   when the first derivation mode is activated and only one intra prediction mode is derived by using the first derivation mode, the intra prediction mode derived by using the first derivation mode is added to the second candidate list,
   a largest index is allocated to the intra prediction mode derived by using the first derivation mode among intra prediction modes included in the second candidate list.

6. The method of claim 3, wherein:

   when the first derivation mode is activated, only one intra prediction mode is derived by using the first derivation mode and a reference line adjacent to the current block is used for an intra prediction of the current block, the intra prediction mode derived by using the first derivation mode is added to the second candidate list,
   a largest index is allocated to the intra prediction mode derived by using the first derivation mode among intra prediction modes included in the second candidate list.

7. The method of claim 2, wherein:
   an intra prediction mode derived by using the second derivation mode is added to the second candidate list based on whether a predefined condition is satisfied.

8. The method of claim 7, wherein:

   when the second derivation mode is activated, the intra prediction mode derived by using the second derivation mode is added to the second candidate list,
   a largest index is allocated to the intra prediction mode derived by using the second derivation mode among intra prediction modes included in the second candidate list.

9. The method of claim 7, wherein:

   when the second derivation mode is activated and only one intra prediction mode is derived by using the second derivation mode, the intra prediction mode derived by using the second derivation mode is added to the second candidate list,
   a largest index is allocated to the intra prediction mode derived by using the second derivation mode among intra prediction modes included in the second candidate list.

10. The method of claim 7, wherein:

    when the second derivation mode is activated, only one intra prediction mode is derived by using the second derivation mode and a reference line adjacent to the current block is used for an intra prediction of the current block, the intra prediction mode derived by using the second derivation mode is added to the second candidate list,
    a largest index is allocated to the intra prediction mode derived by using the second derivation mode among intra prediction modes included in the second candidate list.

11. An image encoding method, the method comprising:

determining an intra prediction mode of a current block, wherein the intra prediction mode of the current block is determined based on a determination mode, wherein the determination mode includes at least one of a first determination mode and a second determination mode, the first determination mode represents a mode for determining the intra prediction mode of the current block based on a reconstructed neighboring sample of the current block, and the second determination mode represents a mode for determining the intra prediction mode of the current block based on a cost of a template region adjacent to the current block;
determining a reference sample of the current block; and
based on the intra prediction mode and the reference sample, generating a prediction sample of the current block.

12. A computer readable storage medium storing a bitstream generated by an image encoding method according to claim 11.

13. A method for transmitting data for image information, the method comprising:

determining an intra prediction mode of a current block, wherein the intra prediction mode of the current block is determined based on a determination mode, wherein the determination mode includes at least one of a first determination mode and a second determination mode, the first determination mode represents a mode for determining the intra prediction mode of the current block based on a reconstructed neighboring sample of the current block, and the second determination mode represents a mode for determining the intra prediction mode of the current block based on a cost of a template region adjacent to the current block;
determining a reference sample of the current block;
based on the intra prediction mode and the reference sample, generating a prediction sample of the current block;
generating a bitstream by encoding the current block based on the prediction sample; and
transmitting data including the bitstream.

FIG.1

FIG.2

# FIG.3

EP 4 459 987 A1

## FIG.4

Derive intra prediction mode — S400

Determine reference sample — S410

Perform intra prediction based on intra prediction mode and reference sample — S420

## FIG.5

Insert default mode — S500

Insert intra mode of neighboring block — S510

Insert derivation mode-based intra mode — S520

Insert additional intra mode — S530

## FIG.6

MPM-based derivation process

↓

dimdMode != -1 → Yes →
1. non_MPM[NUM_NON_MPM_MODE-1] = dimdMode
2. Include[dimdMode] = 1

↓ No

1. Set idx = 0
2. MPM[idx++] = PLANAR
3. Include[PLANAR] = 1

## FIG.7

MPM-based derivation process

↓

dimdMode != -1 && dimdBlend != 0 → Yes →
1. non_MPM[NUM_NON_MPM_MODE-1] = dimdMode
2. Include[dimdMode] = 1

↓ No

1. Set idx = 0
2. MPM[idx++] = PLANAR
3. Include[PLANAR] = 1

## FIG.8

## FIG.9

## FIG.10

331

```
┌─────────────────────────────────────────────────────────┐
│ Intra prediction unit                                   │
│  ┌──────────────┐    ┌──────────────┐    ┌──────────────┐ │
│  │ Prediction   │    │ Reference    │    │ Prediction   │ │
│  │ mode         │ →  │ sample       │ →  │ sample       │ │
│  │ derivation   │    │ determination│    │ generation   │ │
│  │ unit         │    │ unit         │    │ unit         │ │
│  └──────────────┘    └──────────────┘    └──────────────┘ │
└─────────────────────────────────────────────────────────┘
        1000                1010                1020
```

## FIG.11

```
┌─────────────────────────────────┐
│   Determine intra prediction    │ ~S1100
│             mode                │
└─────────────────────────────────┘
                │
                ▼
┌─────────────────────────────────┐
│   Determine reference sample    │ ~S1110
└─────────────────────────────────┘
                │
                ▼
┌─────────────────────────────────┐
│     Perform intra prediction    │
│   based on intra prediction     │ ~S1120
│   mode and reference sample     │
└─────────────────────────────────┘
```

## FIG.12

222

```
┌─────────────────────────────────────────────────────────┐
│ Intra prediction unit                                   │
│  ┌──────────────┐    ┌──────────────┐    ┌──────────────┐ │
│  │ Prediction   │    │ Reference    │    │ Prediction   │ │
│  │ mode         │ →  │ sample       │ →  │ sample       │ │
│  │ determination│    │ determination│    │ generation   │ │
│  │ unit         │    │ unit         │    │ unit         │ │
│  └──────────────┘    └──────────────┘    └──────────────┘ │
└─────────────────────────────────────────────────────────┘
        1200                1210                1220
```

# FIG.13

## INTERNATIONAL SEARCH REPORT

International application No.

**PCT/KR2022/021520**

| A. | CLASSIFICATION OF SUBJECT MATTER |
|---|---|

**H04N 19/11**(2014.01)i; **H04N 19/597**(2014.01)i; **H04N 19/70**(2014.01)i; **H04N 19/176**(2014.01)i; **H04N 19/105**(2014.01)i

According to International Patent Classification (IPC) or to both national classification and IPC

| B. | FIELDS SEARCHED |
|---|---|

Minimum documentation searched (classification system followed by classification symbols)

H04N 19/11(2014.01); H04N 19/105(2014.01); H04N 19/117(2014.01); H04N 19/159(2014.01); H04N 19/593(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 영상(image), 복호화(decoding), 유도(derive), 인트라(intra), 예측(predict), 샘플(sample), 템플릿(template)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2017-0374369 A1 (MEDIATEK INC.) 28 December 2017 (2017-12-28)<br>See paragraphs [0003], [0005], [0010], [0015], [0043], [0048], [0057], [0063] and [0085]-[0086]; and figures 9-10. | 1,11-13 |
| Y | | 2-10 |
| Y | KR 10-2021-0031783 A (B1 INSTITUTE OF IMAGE TECHNOLOGY, INC.) 22 March 2021 (2021-03-22)<br>See paragraphs [0239], [0256] and [0266]. | 2-10 |
| Y | KR 10-2020-0138377 A (TENCENT AMERICA LLC) 09 December 2020 (2020-12-09)<br>See claim 1. | 6,10 |
| A | US 2021-0281854 A1 (INDUSTRY ACADEMY COOPERATION FOUNDATION OF SEJONG UNIVERSITY) 09 September 2021 (2021-09-09)<br>See paragraphs [0240]-[0243]. | 1-13 |

| ✓ | Further documents are listed in the continuation of Box C. | ✓ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 April 2023** | **12 April 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2022/021520** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2021-0035761 A (ELECTRONICS AND TELECOMMUNICATIONS RESEARCH INSTITUTE et al.) 01 April 2021 (2021-04-01)<br>See claim 1; and figure 10. | 1-13 |

Form PCT/ISA/210 (second sheet) (July 2022)

INTERNATIONAL SEARCH REPORT
Information on patent family members

International application No.

**PCT/KR2022/021520**

| Patent document cited in search report | | | Publication date (day/month/year) | Patent family member(s) | | | Publication date (day/month/year) |
|---|---|---|---|---|---|---|---|
| US | 2017-0374369 | A1 | 28 December 2017 | US | 10230961 | B2 | 12 March 2019 |
| | | | | US | 10397569 | B2 | 27 August 2019 |
| | | | | US | 2017-0353719 | A1 | 07 December 2017 |
| | | | | US | 2017-0353730 | A1 | 07 December 2017 |
| KR | 10-2021-0031783 | A | 22 March 2021 | CN | 111937395 | A | 13 November 2020 |
| | | | | EP | 3780620 | A1 | 17 February 2021 |
| | | | | JP | 2022-177266 | A | 30 November 2022 |
| | | | | JP | 7152503 | B2 | 12 October 2022 |
| | | | | KR | 10-2020-0013766 | A | 07 February 2020 |
| | | | | KR | 10-2378882 | B1 | 25 March 2022 |
| | | | | US | 11297309 | B2 | 05 April 2022 |
| | | | | US | 2022-0182602 | A1 | 09 June 2022 |
| | | | | WO | 2019-194485 | A1 | 10 October 2019 |
| KR | 10-2020-0138377 | A | 09 December 2020 | CN | 113508582 | A | 15 October 2021 |
| | | | | EP | 3777139 | A1 | 17 February 2021 |
| | | | | JP | 2022-177230 | A | 30 November 2022 |
| | | | | US | 11095885 | B2 | 17 August 2021 |
| | | | | US | 2021-0329231 | A1 | 21 October 2021 |
| | | | | WO | 2020-072346 | A1 | 09 April 2020 |
| US | 2021-0281854 | A1 | 09 September 2021 | EP | 3528497 | A1 | 21 August 2019 |
| | | | | JP | 2022-020630 | A | 01 February 2022 |
| | | | | JP | 6953523 | B2 | 27 October 2021 |
| | | | | US | 11039148 | B2 | 15 June 2021 |
| | | | | US | 2021-0281853 | A1 | 09 September 2021 |
| | | | | WO | 2018-070790 | A1 | 19 April 2018 |
| KR | 10-2021-0035761 | A | 01 April 2021 | None | | | |

Form PCT/ISA/210 (patent family annex) (July 2022)